# EUROPÄISCHE PATENTSCHRIFT

(11) **EP 2 120 391 B1**
(45) Veröffentlichungstag und Bekanntmachung des Hinweises auf die Patenterteilung: **12.12.2012**
(21) Anmeldenummer: 09159346.7
(22) Anmeldetag: 04.05.2009
(51) Int. Cl.: H04L 9/30, H04L 9/08

(54) **Verfahren zur Erzeugung eines asymmetrischen kryptografischen Schlüsselpaares und die Anwendung in der elektronischen Gesundheitskarte (eGK)**
Method and system for the generation of an asymmetric key and it's use in the Electronic Health Card
Method et système de generation d'une clé asymmetrique et son utilisation pour la carte electronique pour la santé.

(30) Priorität: 15.05.2008 DE 102008001794; 23.06.2008 DE 102008002588
(43) Veröffentlichungstag der Anmeldung: 18.11.2009
(73) Patentinhaber: CompuGroup Medical AG, 56070 Koblenz (DE)
(72) Erfinder: Spalka, Adrrian, 56068, Koblenz (DE); Lehnhardt, Jan, 53127, Bonn (DE)
(74) Vertreter: Richardt Patentanwälte GbR

(56) Entgegenhaltungen:
- DE-A1- 19 837 405
- DE-A1-102005 033 228
- DE-T2- 60 025 401
- US-B1- 6 230 269

## Beschreibung

Die Erfindung betrifft ein Verfahren zur Erzeugung eines asymmetrischen kryptografischen Schlüsselpaares und dessen Anwendung wie z.B. Verfahren zur Verschlüsselung, Eritschlüsselung, digitalen Signierung und digitaler Signaturverifizierung von Datenobjekten sowie weiteren kryptografischen Operationen, Computerprogrammprodukte zur Durchführung von Verfahrensschritten zur Erzeugung eines asymmetrischen kryptografischen Schlüsselpaares und Computerprogrammprodukte zur Durchführung von Verfahrensschritten zur Verschlüsselung, Entschlüsselung, digitalen Signierung und digitaler Signaturverifizierung von Datenobjekten sowie weiteren kryptografischen Operationen.

Die elektronische Gesundheitskarte, abgekürzt eGK, soll in Zukunft die Krankenversicherungskarte in Deutschland ersetzen. Ziel ist es dabei, eine Datenübermittlung zwischen medizinischen Leistungserbringern, Krankenkassen, Apotheken und Patienten in Zukunft kostengünstiger zu gestalten, zu vereinfachen und zu beschleunigen. Dazu gehört auch unter anderem die Ermöglichung eines Zugriffs auf einen elektronischen Arztbrief, eine elektronische Krankenakte sowie ein elektronisches Rezept mit Hilfe der elektronischen Gesundheitskarte.

Beispielsweise können somit medizinische Datenobjekte (MDOs) wie ein elektronischer Arztbrief, eine elektronische Krankenakte oder ein elektronisches Rezept verschlüsselt und digital signiert auf einem zentralen Server gespeichert werden. Eine Verschlüsselung erfolgt dabei vorzugsweise über einen symmetrischen Schlüssel, der für jedes neue medizinische Datenobjekt einer elektronischen Krankenakte wie z.B. ein elektronischer Arztbrief oder ein elektronisches Rezept individuell zufällig erzeugt wird. Der symmetrische Schlüssel selbst wird nach seiner Erstellung beispielsweise mit einem öffentlichen Schlüssel verschlüsselt und zusammen mit den verschlüsselten medizinischen Datenobjekten auf dem zentralen Server abgelegt. Dieser zur Verschlüsselung verwendete öffentliche Schlüssel bildet dabei zusammen mit einem privaten Schlüssel, welcher auf der elektronischen Gesundheitskarte abgespeichert ist, ein kryptografisches asymmetrisches Schlüsselpaar. Damit ist gewährleistet, dass ausschließlich unter Verwendung des geheimen Gesundheitskartenschlüssels ein Zugriff auf die verschlüsselten medizinischen Datenobjekte möglich ist. Bei einem solchen Zugriff erfolgt zunächst eine Entschlüsselung des verschlüsselten symmetrischen Schlüssels mittels des geheimen Gesundheitskartenschlüssels, woraufhin dann mit dem entschlüsselten symmetrischen Schlüssel eine weitere Entschlüsselung der medizinischen Datenobjekte möglich ist. Wurde bei der Erstellung eines MDOs auch eine digitale Signatur mit dem geheimen Gesundheitskartenschlüssel erzeugt, so kann anschließend die Integrität des MDOs und die Authentizität des MDO-Erzeugers über die digitale Signatur verifiziert werden. Beispielsweise offenbart die DE 10 2004 051 296 B3 ein Verfahren zur Speicherung von Daten und zur Abfrage von Daten sowie entsprechende Computerprogrammprodukte. Eine personalisierte Chipkarte ermöglicht die Speicherung einer virtuellen Patientenakte auf einem Datenserver. Unter Verwendung der Chipkarte können Daten, wie zum Beispiel ein MDO einer Patientenakte, von einem Praxis-EDV-System einer Arztpraxis verschlüsselt und digital signiert an einen Datenserver übertragen werden.

Aus der DE 102 58 769 A1 ist eine weitere Anwendung von Chipkarten für Patientendaten bekannt.

Die Verwendung einer Chipkarte zur Verschlüsselung und Entschlüsselung von medizinischen Datenobjekten hat den Nachteil, dass diese durch einen Patienten ständig mitgeführt werden muss und dass vor Ort ein Chipkartenleser vorhanden sein muss. Ist also ein Patient nicht in Besitz seiner elektronischen Gesundheitskarte oder ist ein Chipkartenleser nicht vorhanden, ist es bei einem Arztbesuch in keiner Weise möglich, auf verschlüsselt abgespeicherte patientenbezogene medizinische Datenobjekte zuzugreifen.

Lin, Y.; Maozhi, X.; Zhiming, Z.: "Digital signature systems based on Smartcard and fingerprint feature". In: Journal of Systems Engineering and Electronics, Vol. 18, No. 4, 2007, pp. 825-834 beschäftigt sich mit Signatursystemen basierend auf Smartcards und Fingerabdruckeigenschaften. Dabei ist ein kryptografischer Schlüssel, welcher auf der Smartcard gespeichert ist, nur dann zugänglich, wenn entsprechende Fingerabdruckeigenschaften mit einer Vorlage übereinstimmen, welche auf der Smartcard gespeichert ist.

Der Erfindung liegt demgegenüber die Aufgabe zugrunde, ein verbessertes Verfahren zur Erzeugung eines asymmetrischen kryptografischen Schlüsselpaares zu schaffen sowie Anwendungen hierfür, wie z.B. Verfahren zur Verschlüsselung, Entschlüsselung, digitalen Signierung und digitalen Signaturverifizierung von Datenobjekten sowie weiteren kryptografischen Operationen, Computerprogrammprodukte zur Durchführung von Verfahrensschritten zur Erzeugung eines asymmetrischen kryptografischen Schlüsselpaares und Computerprogrammprodukte zur Durchführung von Verfahrensschritten zur Verschlüsselung, Entschlüsselung, digitalen Signierung und digitalen Signaturverifizierung von Datenobjekten sowie weiteren kryptografischen Operationen zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Nach Ausführungsformen der Erfindung wird ein Verfahren zur benutzerkennungsbasierten Erzeugung eines asymmetrischen kryptografischen Schlüsselpaares geschaffen, wobei das Verfahren die folgenden Schritte umfasst:
1. Empfang einer eindeutigen Benutzeridentifikation und einer der Benutzeridentifikation zugeordneten beliebig wählbaren Benutzerkennung.
2. Abbildung der Benutzerkennung auf einen Wert durch eine Funktion *g*. Bei der Funktion *g* kann es sich um die Identitätsfunktion oder eine nicht triviale Funktion handeln. Unter dem Aspekt der Sicherheit und Vertraulichkeit ist *g* vorzugsweise als eine kollisionsfreie Einwegfunktion gewählt (sog. one-way Funktion), wie z.B. eine kryptografische Hashfunktion.
3. Erzeugung eines Zufallswertes *z*.
4. Berechnung eines ersten Datenobjektschlüssels durch Anwendung einer Funktion *f* auf *g*(Benutzerkennung) und *z*. Beispielsweise werden *g*(Benutzerkennung), d.h. das Ergebnis der Anwendung der Funktion *g* auf die Benutzerkennung, und z miteinander verkettet und die Funktion *f* wird auf das Ergebnis dieser Verkettung angewendet. Unter dem Aspekt der Sicherheit handelt es sich bei *f* vorzugsweise um eine kollisionsfreie Einwegfunktion; z.B. kann *f* eine kryptografische Hash-Funktion sein, die auf die Konkatenation des Hash-Wertes der Benutzerkennung und des Zufallswertes *z* angewendet wird.
5. Berechnung eines zweiten Datenobjektschlüssels aus dem ersten Datenobjektschlüssel, wobei der erste und der zweite Datenobjektschlüssel ein asymmetrisches kryptografisches Schlüsselpaar bilden. Beispielsweise kann:
   - für elliptische Kurven der zweite Datenobjektschlüssel, der ein Punkt auf der elliptischen Kurve ist, durch Multiplikation des ersten Datenobjektschlüssels, der eine ganze Zahl darstellt, mit dem Basispunkt aus den Domainparametern berechnet werden,
   - für RSA wird der zweite Datenobjektschlüssel (eine ganze Zahl) derart berechnet, dass er mit dem ersten Datenobjektschlüssel (ebenfalls eine ganze Zahl) eine im RSA-Verfahren definierte Kongruenzrelation erfüllt.

Beispielsweise kann nun
- ein Datenobjekt mit dem zweiten Datenobjektschlüssel verschlüsselt und mit dem ersten Datenobjektschlüssel entschlüsselt werden. Dabei kann das Datenobjekt (z.B. ein medizinisches Datenobjekt) entweder direkt mit dem zweiten Datenobjektschlüssel verschlüsselt werden oder das Datenobjekt wird zunächst mit einem zufällig gewählten symmetrischen Schlüssel verschlüsselt, welcher dann mit dem zweiten Datenobjektschlüssel asymmetrisch verschlüsselt wird.
- ein Datenobjekt mit dem ersten Datenobjektschlüssel digital signiert und mit dem zweiten Datenobjektschlüssel die digitale Signatur verifiziert werden.
- ein weiteres kryptografisches Verfahren mit diesem Schlüsselpaar eingesetzt werden.

In einem weiteren Aspekt betrifft die Erfindung ein Computerprogrammprodukt mit von einem Prozessor ausführbaren Instruktionen der Durchführung von Verfahrens schritten zur Erzeugung eines asymmetrischen kryptografischen Schlüsselpaares, wobei das Verfahren die folgenden Schritte umfasst:
1. Empfang einer eindeutigen Benutzeridentifikation *id* und einer der Benutzeridentifikation zugeordneten beliebig wählbaren Benutzerkennung *pw*.
2. Abbildung der Benutzerkennung auf einen Wert durch eine Funktion *g*. Bei der Funktion *g* kann es sich um die Identitätsfunktion oder eine nicht triviale Funktion handeln. Unter dem Aspekt der Sicherheit und Vertraulichkeit ist *g* vorzugsweise als eine kollisionsfreie Einwegfunktion gewählt (sog. one-way Funktion), wie z.B. eine kryptografische Hashfunktion.
3. Erzeugung eines Zufallswertes *z*.
4. Berechnung eines ersten Datenobjektschlüssels durch Anwendung einer Funktion *f* auf g(Benutzerkennung) und *z*. Beispielsweise werden *g*(Benutzerkennung), d.h. das Ergebnis der Anwendung der Funktion *g* auf die Benutzerkennung, und *z* miteinander verkettet und die Funktion *f* wird auf das Ergebnis dieser Verkettung angewendet. Z.B. kann *f* eine kryptografische Hash-Funktion sein, die auf die Konkatenation des Hash-Wertes der Benutzerkennung und des Zufallswertes *z* angewendet wird.
5. Berechnung eines zweiten Datenobjektschlüssels aus dem ersten Datenobjektschlüssel, wobei der erste und der zweite Datenobjektschlüssel ein asymmetrisches kryptografisches Schlüsselpaar bilden. Beispielsweise kann:
   - für elliptische Kurven der zweite Datenobjektschlüssel, der ein Punkt auf der elliptischen Kurve ist, durch Multiplikation des ersten Datenobjektschlüssels, der eine ganze Zahl darstellt, mit dem Basispunkt aus den Domainparametern berechnet werden.
   - für RSA wird der zweite Datenobjektschlüssel (eine ganze Zahl) derart berechnet, dass er mit dem ersten Datenobjektschlüssel (ebenfalls eine ganze Zahl) eine im RSA-Verfahren definierte Kongruenzrelation erfüllt.

Die Durchführung der genannten Verfahrensschritte hat den Vorteil, dass hier asymmetrische kryptografische Schlüsselpaare erzeugt werden können, wobei dies unter Verwendung einer beliebig wählbaren Benutzerkennung erfolgt. Die Benutzerkennung selbst geht in den Berechnungsalgorithmus für den ersten und zweiten Datenobjektschlüssel ein.

Damit unterscheidet sich dieses Verfahren zur Erzeugung eines asymmetrischen kryptografischen Schlüsselpaares von gängigen Schlüsselerzeugungsverfahren, bei welchen nach heutigem Stand der Technik lediglich eine Zuordnung einer beliebig wählbaren Benutzerkennung zu einem zugehörigen erzeugten kryptografischen Schlüsselpaar möglich ist, nicht hingegen eine funktionale Berechung von Schlüsselpaaren unter Verwendung der beliebig wählbaren Benutzerkennung selbst, bei der die permanente Speicherung der Zuordnung der Benutzerkennung zum Schlüssel entfällt.

Bei bisher üblichen Verfahren wird eine beliebig gewählte Benutzerkennung oder deren Abbild in einer Tabelle gespeichert und öffentlichen und privaten Schlüsseln eindeutig zugeordnet, wobei lediglich durch administrative und/oder juristische Regelungen festgelegt wird, dass unbefugte Personen keinen Zugriff auf den privaten Schlüssel haben dürfen. Diese Vorgehensweise beeinträchtigt die Sicherheit erheblich: Bekommt eine unbefugte Person oder auch eine staatliche Stelle aufgrund von diversen Überwachungsgesetzen Zugriff auf die Datenbank, welche die Passwörter den öffentlichen und privaten Schlüsseln zuordnet, so ist diese Person oder Organisation sofort in der Lage, durch Zugriff auf diese einzelne schlüsselverwaltende Institution Zugriff auf alle Datenobjekte einer Person zu erhalten.

Damit hat das erfindungsgemäße Verfahren zur Erzeugung eines asymmetrischen kryptografischen Schlüsselpaares den Vorteil, dass nebst der Möglichkeit einer beliebig wählbaren Benutzerkennung keine zentrale Instanz in Besitz der Kombination von Benutzerkennung (z.B. Passwort) und Schlüsselpaaren gelangen kann. Der erste Datenobjektschlüssel lässt sich lediglich unter Kenntnis eines Zufallswertes und der Benutzerkennung berechnen. Die Erzeugung des zweiten Datenobjektschlüssels erfordert ebenfalls die Kenntnis des Zufallswerts und der Benutzerkennung, wobei die Benutzerkennung vorzugsweise ausschließlich in geheimer Weise in Kenntnis des entsprechenden Benutzers steht. Damit ist es zum Beispiel nicht mehr möglich, durch Beschlagnahmung oder Diebstahl von zentralen Datenbankservern Zugriff auf Datenobjektschlüssel und damit auf verschlüsselte Daten ohne aktives Mithelfen jener Personen zu erhalten, welche in Besitz ihrer privaten, geheimen Benutzerkennungen stehen.

Ein weiterer Vorteil des erfindungsgemäßen Verfahrens ist, dass selbst bei Wahl der gleichen Benutzerkennung durch verschiedene Benutzer aufgrund des Eingehens des Zufallswertes bei der Erzeugung des ersten Datenobjektschlüssel sichergestellt werden kann, dass niemals das gleiche Schlüsselpaar verschiedenen Benutzern zugeordnet wird.

Es sei hier darauf hingewiesen, dass Ausführungsformen des erfindungsgemäßen Verfahrens zur Erzeugung eines asymmetrischen kryptografischen Schlüsselpaares auf beliebige Kryptosysteme zur Erzeugung asymmetrischer Schlüsselpaare angewendet werden können, wie zum Beispiel das RSA-, das Rabin- und das Elgamal-Kryptosystem oder kryptografische Verfahren auf elliptischen Kurven. Aus dem ersten Datenobjektschlüssel, den man basierend auf der Benutzerkennung und dem Zufallswert erhalten hat, wird der zweite Datenobjektschlüssel berechnet, wobei für diese Berechnung solche Verfahren zur Anwendung kommen können.

Hierzu kann es erforderlich sein, dass der erste Datenobjektschlüssel eine oder mehrere vorgegebene Eigenschaften haben muss und/oder Bedingungen erfüllen muss, die im Rahmen einer Zulässigkeitsprüfung überprüft werden. Wenn sich der erste Schlüssel als für ein gewähltes Verfahren unzulässig erweist, so wird ein neuer Zufallswert generiert, um einen neuen Kandidaten für einen ersten Datenobjektschlüssel zu erzeugen, der dann wiederum einer Zulässigkeitsprüfung unterzogen wird. Dies wird solange wiederholt, bis ein zulässiger erster Datenobjektschlüssel gefunden worden ist. In diese Zulässigkeitsprüfung können Beschränkungen eingehen, welche sich direkt aus dem Algorithmus zur Durchführung eines entsprechenden asymmetrischen kryptografischen Schlüsselerzeugungsverfahrens ergeben.

Darüber hinaus können auch weitere Einschränkungen in die Zulässigkeitsprüfung eingehen, welche sich z.B. auf die Entropie des erzeugten Schlüssels beziehen oder aus aktuellen Erkenntnissen bezüglich der Angreifbarkeit des entsprechenden Schlüsselerzeugungsverfahrens ergeben. Beispielsweise gibt es für das RSA-Verfahren eine Reihe von allgemein bekannten und regelmäßig ergänzten Beschränkungen, deren Einhaltung bei einer Schlüsselerzeugung von Behörderistellen gefordert wird, um die Angreifbarkeit der erzeugten Schlüsselpaare zu minimieren. Beispielsweise spezifiziert PKCS#1 (Public Key Cryptography Standards) eine Reihe von kryptografischen Spezifikationen für RSA, welche von öffentlichen und privaten RSA-Schlüsselpaaren eingehalten werden müssen. Der in der Entwicklung befindliche Standard PKCS#13 wird die Anforderungen an die Schlüsselerzeugung auf elliptischen Kurven festsetzen.

Ein Aspekt der Erfindung ist, dass die Berechnung des ersten Datenobjektschlüssels unter Verwendung einer Funktion *g*, angewendet auf die Benutzerkennung *pw* erfolgt. Nach einer Ausführungsform wird entweder die beliebig wählbare Benutzerkennung als solche empfangen und daraufhin unter Verwendung der Funktion *g* umgewandelt, oder es wird direkt der Funktionswert *g(pw)* empfangen.

Die Berechnung des ersten Datenobjektschlüssels unter Verwendung des Wertes *b* = *g(pw)* und des Zufallswertes *z* hat den Vorteil, dass somit aus verhältnismäßig unsicheren Benutzerkennungen Eingangswerte berechnet werden können, welche eine hohe Zufälligkeit haben und somit in effektiver Weise bei der Berechnung des ersten Datenobjektschlüssels die Sicherheit desselben weiter erhöhen. Beispielsweise wird für *g* die kryptografische Hash-Funktion SHA-256 angewendet.

Nach einer weiteren Ausführungsform der Erfindung wird der erste Datenobjektschlüssel durch Anwenden einer Funktion *f* auf die Werte *b* und *z* berechnet. Beispielsweise kann *f* als die Anwendung der kryptografischen Hash-Funktion SHA-256 auf die Konkatenation, also Hintereinanderhängung, von *b* und *z* definiert sein.

Durch Anwendung der Funktion *f* auf den Zufallswert *z* und den Funktionswert *g(pw)* wird eine hohe Qualität des ersten Datenobjektschlüssels gewährleistet. In anderen Worten, der erste Datenobjektschlüssel weist aufgrund der zufälligen Wahl von *z* ebenfalls eine hohe Zufälligkeit auf, sodass ein Erraten des ersten Datenobjektschlüssels damit praktisch unmöglich gemacht wird.

Nach einer Ausführungsform der Erfindung wird das Schlüsselpaar für ein Kryptosystem auf elliptischen Kurven berechnet. Eine elliptische Kurve ist gegeben durch die Gleichung y² = x³ + ax + b, wobei die Parameter *a* und *b*, wie auch die Koordinaten der Punkte (*x*,*y*) auf der Kurve ganze Zahlen aus dem Intervall [0, *n-1*] sind. Die Werte *a*, *b, n,* sowie ein gewählter Kurvenpunkt *P* bilden die sogenannten DomainParameter der elliptischen Kurve, welche zur Durchführung von kryptografischen Verfahren unter Verwendung des ersten und zweiten Schlüssels mit bekannt gegeben werden müssen. Die Anzahl der Punkte, die die Gleichung einer elliptischen Kurve erfüllen, bezeichnet man als die Ordnung der Kurve. Der erste Datenobjektschlüssel stellt eine natürliche Zahl dar, und der zweite Datenobjektschlüssel, ein Punkt auf der Kurve, ist das Ergebnis der Multiplikation des ersten Datenobjektschlüssels mit dem Kurvenpunkt *P* der elliptischen Kurve.

Die Verwendung eines Kryptosystems auf elliptischen Kurven hat folgende Vorteile:
- Der erste Datenobjektschlüssel kann eine beliebige natürliche Zahl aus dem Intervall [*1*, *n-1*] sein. Sie ist an keine weiteren funktionalen Bedingungen gebunden; der Aspekt ihrer Beliebigkeit wird im weiteren Verlauf eine große Rolle spielen.
- Ein Kryptosystem auf elliptischen Kurven zu brechen hat eine sehr hohe Komplexität, die viel höher ist als bei RSA.
- Die Schlüssel sind im Vergleich zu RSA sehr kurz und die Berechnungen auf der Kurve relativ einfach, womit sie vielseitig und effizient implementiert werden können.
- Der zweite Datenobjektschlüssel kann aus dem ersten Datenobjektschlüssel einfach und jederzeit wieder berechnet werden.

Über die Funktionen *f* und *g* kann sehr effizient aus der Benutzerkennung und dem Zufallswert der erste Datenobjektschlüssel berechnet werden. Damit ist es möglich, durch mathematische Funktionen der gewählten Benutzerkennung das kryptografische Schlüsselpaar zuzuordnen. Wegen dieses funktionellen Zusammenhangs ist hier ein Vorhalten einer tabellarischen Zuordnung von Schlüsselpaar und einer entsprechenden Benutzerkennung nicht notwendig.

Nach einer weiteren Ausführungsform der Erfindung umfasst das Verfahren den Schritt der Zulässigkeitsprüfung des ersten Datenobjektschlüssels. Im Rahmen der Zulässigkeitsprüfung wird geprüft, ob der erste Datenobjektschlüssel größer als 1 und kleiner als die Ordnung der elliptischen Kurve ist. Bei Erfüllung dieser Prüfbedingung sind der Zufallswert sowie der erste und der zweite Datenobjektschlüssel zulässig. Ist die Prüfbedingung jedoch nicht erfüllt, wird ein neuer Zufallswert gewählt, mit dem ein erneutes Berechnen des ersten Datenobjektschlüssels erfolgt sowie ein erneutes Durchführen der Zulässigkeitsprüfung dieses Datenobjektschlüssels. Dieser Vorgang wird wiederholt, bis die Zulässigkeitsprüfung bestanden wird.

Die Zulässigkeitsprüfung kann um weitere Prüfbedingungen erweitert werden, z.B. um die Prüfung, dass der erste Datenobjektschlüssel eine hohe Zufälligkeit aufweist. Hierzu sei angemerkt, dass in der Kryptografie üblicherweise mit algebraischen Strukturen gearbeitet wird, die nur endlich viele Elemente enthalten. Dies hat seine Ursache darin, dass im Falle einer endlichen Anzahl von Elementen viele in den reellen Zahlen harmlose Probleme schwierig werden, sodass elliptische Kurven mit endlich vielen Elementen effektiv für kryptografische Anwendungen verwendet werden können. Für kryptografische Anwendungen ist es nun wichtig, dass die verwendete algebraische Struktur groß genug ist, das heißt, dass die Anzahl der Punkte auf einer elliptischen Kurve, als Ordnung bezeichnet, ausreichend groß ist. In diesem Kontext muss man in Betracht ziehen, dass der erzeugte erste Datenobjektschlüssel größer sein kann als die Ordnung der elliptischen Kurve. Um hier dennoch eine Assoziation zu ermöglichen, ist es üblich, eine Division des ersten Datenobjektschlüssels modulo der Ordnung der elliptischen Kurve durchzuführen. Damit ergibt sich jedoch eine hohe Wahrscheinlichkeit, dass die resultierende Zahl sich in einem unteren Wertebereich des Intervalls [2, *r-1*] (mit r als der Ordnung der elliptischen Kurve) befindet oder sogar 0 oder 1 ist, sodass sich hiermit die Schwierigkeit reduziert, einen in diesem Wertebereich liegenden Punkt der Kurve mathematisch oder durch Ausprobieren herauszufinden. Durch die Durchführung der Zulässigkeitsprüfung wird somit eine Einschränkung des Wertebereichs, in welchem sich der erste Datenobjektschlüssel befindet, zuverlässig vermieden, sodass sich hiermit die Entropie des ersten Datenobjektschlüssels und damit dessen Zufälligkeit in ausreichendem Maße sicherstellen lässt.

Ein weiterer Vorteil der Zulässigkeitsprüfung ist, dass hiermit sichergestellt werden kann, dass eine Verträglichkeit des ersten Datenobjektschlüssels mit entsprechenden Programmbibliotheken für elliptische Kurven, wie sie nach dem Stand der Technik verfügbar sind, zuverlässig gewährleistet werden kann.

Es sei hier darauf hingewiesen, dass zur Durchführung des Verfahrens zur Erzeugung eines asymmetrischen kryptografischen Schlüsselpaares unter Verwendung einer elliptischen Kurvenfunktion die Durchführung der Zulässigkeitsprüfung nicht zwingend notwendig ist. Auch ohne Anwendung der Zulässigkeitsprüfung lassen sich hier Schlüsselpaare erzeugen, welche jedoch unter Umständen je nach Benutzerkennung und Zufallswert nicht sehr hohen Sicherheitsanforderungen Rechnung tragen können, welche für kryptografische Anwendungen gefordert sein könnten. Die Zulässigkeitsprüfung ist im Falle elliptischer Kurven ein weiterer Schritt, um sicherzustellen, dass die erzeugten Schlüsselpaare eben jenen Sicherheitsanforderungen genügen.

Nach einer Ausführungsform der Erfindung ist die Bitlänge des Zufallswertes größer oder gleich der Bitlänge der Ordnung der elliptischen Kurve. Außerdem ist nach einer Ausführungsform der Erfindung der Zufallswert so gewählt, dass der Wert des erzeugten ersten Datenobjektschlüssels kleiner als die Ordnung der elliptischen Kurve ist. Beide Kriterien haben ebenfalls, wie bereits für die Zulässigkeitsprüfung diskutiert, denselben Effekt, nämlich dass somit eine hohe Entropie des ersten Datenobjektschlüssels gewährleistet werden kann. Damit wird in anderen Worten die Sicherheit des ersten Datenobjektschlüssels und damit die Sicherheit des Verschlüsselungsverfahrens signifikant erhöht.

Nach einer Ausführungsform der Erfindung wird das Schlüsselpaar für ein RSA-Kryptosystem berechnet. Ein RSA-Kryptosystem ist gegeben durch eine Zahl n, die das Produkt zweier Primzahlen *p* und *q* ist (*n* = *p · q*), der Zahl *d*, die der Bedingung *ggT(d, (p - 1)·(q - 1))* = *1* genügt und der Zahl e, die der Bedingung *e·d ≡ 1 mod* (*p* - *1)·(q - 1)* genügt ("ggT" steht für größter gemeinsamer Teiler). Nach der Wahl von *d* und der Berechnung von *e* müssen die Werte *p*, *q* und *(p - 1)·(q - 1)* gelöscht werden. Welche der beiden Zahlen e und d der öffentliche und welche der private Schlüssel ist, ist bei RSA grundsätzlich frei wählbar; in dieser Erfindung berechnen die Funktionen *f* und *g* aus der Benutzerkennung *pw* und dem Zufallswert *z* den ersten Datenobjektschlüssel *d*. Über den erweiterten euklidschen Algorithmus wird dann aus dem ersten Datenobjektschlüssel *d* der zweite Datenobjektschlüssel *e* berechnet.

Die Vorteile des RSA-Verfahrens sind die Tatsachen, dass das Verfahren bei entsprechend lang gewählten Schlüsseln nach wie vor sehr sicher ist und dass es eine hohe Verbreitung besitzt. Jedoch besitzt RSA auch die Nachteile, dass es aufgrund der erforderlichen großen Schlüssellänge im Betrieb langsam ist und moderne Faktorisierungsalgorithmen Anlass zu der Befürchtung geben, dass RSA in nicht allzu ferner Zukunft gebrochen wird.

Auch für RSA ist es über die Funktionen *f* und *g* möglich, aus der Benutzerkennung und dem Zufallswert den ersten Datenobjektschlüssel zu berechnen. Damit ist es auch für RSA möglich, durch mathematische Funktionen der gewählten Benutzer kennung ein kryptografisches Schlüsselpaar zuzuordnen. Wegen dieses funktionellen Zusammenhangs ist ein Vorhalten einer tabellarischen Zuordnung von Schlüsselpaar und einer entsprechenden Benutzerkennung auch für RSA nicht notwendig.

Nach einem weiteren Aspekt der Erfindung umfasst das Verfahren den Schritt der Zulässigkeitsprüfung des ersten RSA-Datenobjektschlüssels. Im Rahmen der Zulässigkeitsprüfung wird geprüft, ob der erste Datenobjektschlüssel *d* die Bedingungen
- *d* liegt im Intervall [2, *(p* - *1)·(q - 1) -* 2] und
- *ggT(d, (p - 1)·(q - 1)) = 1*
erfüllt. Bei Erfüllung dieser Prüfbedingungen sind der Zufallswert sowie der erste und der zweite Datenobjektschlüssel zulässig. Ist die Prüfbedingung jedoch nicht erfüllt, wird ein neuer Zufallswert *z* gewählt, mit dem ein erneutes Berechnen des ersten Datenobjektschlüssels erfolgt sowie ein erneutes Durchführen der Zulässigkeitsprüfung dieses Datenobjektschlüssels. Dieser Vorgang wird wiederholt, bis die Zulässigkeitsprüfung bestanden wird.

Nach einer weiteren Ausführungsform der Erfindung wird der Zufallswert von einer Datenbank abgerufen, wobei der Zufallswert eindeutig der Benutzeridentifikation zugeordnet ist. Beispielsweise wird bei einer ersten Durchführung des Verfahrens zur Erzeugung des asymmetrischen Schlüsselpaares einmalig ein Zufallswert von einer vertrauenswürdigen Stelle, z.B. einer Zertifizierungsstelle erzeugt, welcher im Falle der Zulässigkeit des ersten Datenobjektschlüssels für kryptografische Vorgänge einem entsprechenden Benutzer indirekt zugänglich sein muss. Durch Abspeichern des Zufallswerts in einer Datenbank, zugeordnet der eindeutigen Benutzeridentifikation, kann ein Computerprogramm, welches das erfindungsgemäße Verfahren zur Erzeugung von asymmetrischen Schlüsselpaaren ausführt, den Zufallswert über eine sichere Kommunikationsverbindung anhand der Benutzeridentifikation abrufen und dazu verwenden, den entsprechenden ersten und gegebenenfalls auch den zweiten Datenobjektschlüssel zu generieren.

Vorzugsweise ist der Zufallswert verschlüsselt in der Datenbank abgelegt. Hierzu kann nach einer Ausführungsform der Erfindung eine symmetrische Verschlüsselung, z.B. unter Verwendung von AES-256, Anwendung finden. Die Verwendung eines verschlüsselten Zufallswertes hat den Vorteil, dass damit Wörterbuchangriffe zur versuchsweisen Entschlüsselung des ersten Schlüssels verhindert werden können.

Nach einer weiteren Ausführungsform der Erfindung sind die Computerprogrammprodukte durch Applets oder Browser Plugins ausgebildet. Ebenso ist es möglich, die Computerprogrammprodukte als eigenständige Anwendungen für ein Datenverarbeitungssystem bereitzustellen. Die Verwendung eines Applets oder eines Browser Plugins hat den Vorteil, dass bestehende Datenverarbeitungssysteme zur Durchführung des Verfahrens zur Schlüsselerzeugung und konsequenter Weise auch zur Durchführung von kryptografischen Operationen wie Verschlüsselung, Entschlüsselung sowie Erstellung und Verifikation von digitalen Signaturen, nicht umgerüstet werden müssen: Hier genügt lediglich das Laden eines Applets, beispielsweise über das Internet, welches in sicherer Weise die beschriebenen Operationen durchführen kann.

In einem weiteren Aspekt betrifft die Erfindung ein Computerprogrammprodukt mit von einem Prozessor ausführbaren Instruktionen zur Durchführung von Verfahrensschritten zur Entschlüsselung eines Datenobjekts, wobei das Datenobjekt mit einem zweiten Datenobjektschlüssel verschlüsselt in einer ersten Datenbank gespeichert ist, wobei das verschlüsselte Datenobjekt über eine eindeutige Benutzendentifikation identifizierbar ist, wobei das Verfahren den Empfang der Benutzeridentifikation und einer der Benutzeridentifikation zugeordneten Benutzerkennung umfasst. Ferner umfasst das Verfahren das Abrufen eines der Benutzeridentifikation zugeordneten Zufallswertes von einer zweiten Datenbank. Es folgt das Berechnen eines ersten Datenobjektschlüssels, wobei in die Berechnung der Zufallswert und die Benutzerkennung eingehen, wobei der erste und der zweite Datenobjektschlüssel ein asymmetrisches kryptografisches Schlüsselpaar bilden. Nach Abrufen des verschlüsselten Datenobjekts von der ersten Datenbank erfolgt ein Entschlüsseln des verschlüsselten Datenobjekts mit dem ersten Datenobjektschlüssel.

Wie bereits oben erwähnt, hat ein solches Verfahren zur Entschlüsselung eines Datenobjekts den Vorteil, dass eine Entschlüsselung lediglich unter Kenntnis der geheimen Benutzerkennung möglich ist. Typischerweise ist lediglich ein autorisierter Benutzer in Kenntnis der Benutzerkennung, sodass lediglich mit dessen aktiven Mitwirken und Einverständnis eine Entschlüsselung von Datenobjekten überhaupt möglich ist. Selbst wenn Unbefugte in Besitz des zweiten Datenobjektschlüssels, der Benutzeridentifikation und des Zufallswerts kommen würden, wäre dennoch eine Entschlüsselung des Datenobjekts nicht möglich.

In einem weiteren Aspekt betrifft die Erfindung ein Computerprogrammprodukt mit von einem Prozessor ausführbaren Instruktionen zur Durchführung von Verfahrensschritten zur Erzeugung einer digitalen Signatur eines Datenobjekts, wobei das Verfahren den Empfang der Benutzeridentifikation und einer der Benutzeridentifikation zugeordneten Benutzerkennung umfasst. Ferner umfasst das Verfahren das Abrufen eines der Benutzeridentifikation zugeordneten Zufallswertes von einer zweiten Datenbank. Es folgt das Berechnen eines ersten Datenobjektschlüssels, wobei in die Berechnung der Zufallswert und die Benutzerkennung eingehen, wobei der erste und der zweite Datenobjektschlüssel ein asymmetrisches kryptografisches Schlüsselpaar bilden. Nach der Berechnung des ersten Datenobjektschlüssels erfolgt die Erzeugung der digitalen Signatur, in die der erste Datenobjektschlüssel und beispielsweise der kryptografische Hash-Wert des Datenobjekts einfließen. Die digitale Signatur wird zusammen mit der Kennung des Datenobjekts in der ersten Datenbank abgespeichert.

Nach einer Ausführungsform der Erfindung wird der Zufallswert *z* über eine sichere Kommunikationsverbindung von der zweiten Datenbank abgerufen.

Nach einer Ausführungsform der Erfindung wird der Zufallswert *z* verschlüsselt in der zweiten Datenbank gespeichert.

Nach einer Ausführungsform der Erfindung erfolgt die Berechnung des ersten Datenobjektschlüssels unter Verwendung einer kollisionsfreien Einwegfunktion *g* wie z.B. einer kryptografischen Hash-Funktion, die auf die Benutzerkennung angewendet wird.

Nach einer weiteren Ausführungsform der Erfindung wird die Benutzerkennung als Ergebnis einer kollisionsfreien Einwegfunktion *g* wie z.B. einer kryptografischen Hash-Funktion empfangen.

Nach einer weiteren Ausführungsform der Erfindung wird der erste Datenobjektschlüssel berechnet durch Anwendung einer kollisionsfreien Einwegfunktion *f* wie z.B. einer kryptografischen Hash-Funktion auf die funktionale Verknüpfung zweier Argumente: den Zufallswert *z* und das Ergebnis von *g*(Benutzerkennung). Diese funktionale Verknüpfung kann beispielsweise die Konkatenation, also das Hintereinanderhängen sein.

Nach einer weiteren Ausführungsform der Erfindung handelt es sich bei dem Datenobjekt um ein medizinisches Datenobjekt.

Nach einer weiteren Ausführungsform der Erfindung sind die Computerprogrammprodukte zur Entschlüsselung bzw. Erzeugung einer digitalen Signatur durch Applets oder Browser Plugins ausgebildet.

In einem weiteren Aspekt betrifft die Erfindung ein Datenverarbeitungssystem zur Erzeugung eines asymmetrischen kryptografischen Schlüsselpaares, wobei das Datenverarbeitungssystem umfasst Mittel zum Empfang einer beliebig wählbaren Benutzerkennung, Mittel zum Berechnen eines ersten Datenobjektschlüssels, wobei in die Berechnung ein Zufallswert und die Benutzerkennung eingeht, und Mittel zum Berechnen eines zweiten Datenobjektschlüssels aus dem ersten Datenobjektschlüssel, wobei der erste und der zweite Datenobjektschlüssel das asymmetrische kryptografische Schlüsselpaar bilden.

Nach einer Ausführungsform der Erfindung handelt es sich bei dem Datenverarbeitungssystem um ein Datenverarbeitungssystem einer vertrauenswürdigen Stelle, z.B. einer Zertifizierungsstelle oder eines Trust-Centers. Alternativ ist es auch möglich, eine entsprechende, vorzugsweise portable Hardwareeinheit bereitzustellen, welche als vertrauenswürdige Stelle das Datenverarbeitungssystem umfasst. In einer weiteren Alternative kann es sich bei der vertrauenswürdigen Stelle um den Client selbst handeln, welcher die kryptografischen Operationen vornimmt. Nach einer weiteren Ausführungsform der Erfindung handelt es sich bei dem Datenverarbeitungssystem um ein Datenverarbeitungssystem, das auf einem separaten, gesicherten Hardwaremodul abläuft. Hierbei kann z.B. ein Trusted Platform Module (TPM) zum Einsatz kommen.

Im Folgenden werden Ausführungsformen der Erfindung anhand der Zeichnungen näher erläutert. Es zeigen:
- Figur 1:: ein Blockdiagramm eines Datenverarbeitungssystems,
- Figur 2:: ein Blockdiagramm eines weiteren Datenverarbeitungssystems,
- Figur 3:: ein Flussdiagramm eines Verfahrens zur Schlüsselerzeugung, asymmetrischen Verschlüsselung von Daten und der Signaturverifikation,
- Figur 4:: ein Flussdiagramm eines Verfahrens zur Entschlüsselung von Daten und zur Erzeugung einer digitalen Signatur von Daten mittels eines asymmetrischen Schlüsselverfahrens,
- Figur 5:: ein Flussdiagramm eines Verfahrens zur Berechung von asymmetrischen Schlüsseln nach dem RSA-Verfahren.

Im Folgenden sind einander ähnliche Elemente mit denselben Bezugszeichen gekennzeichnet.

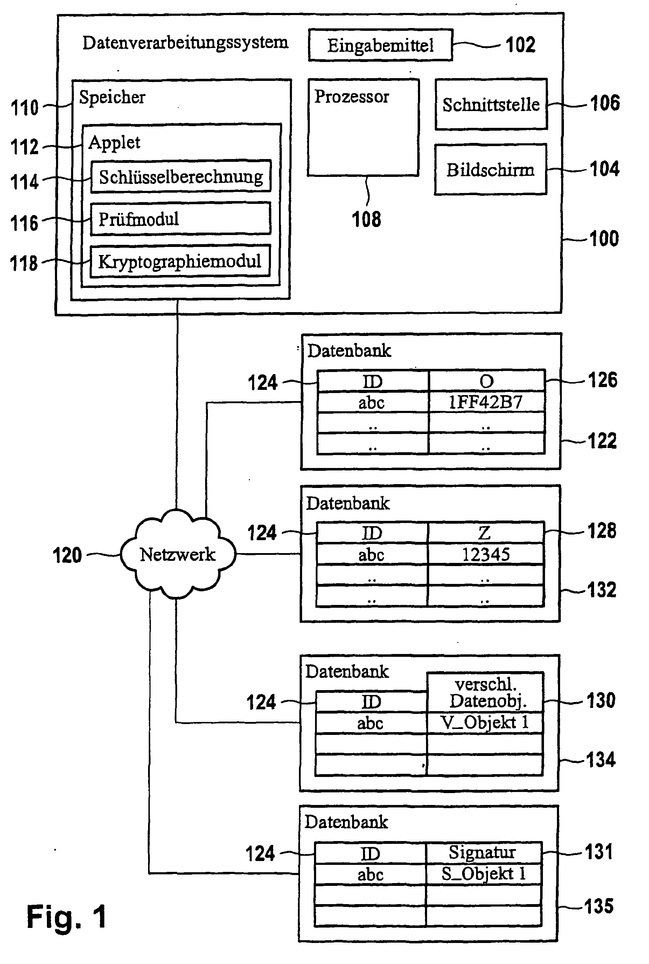

Die Figur 1 zeigt ein Datenverarbeitungssystem 100. Das Datenverarbeitungssystem umfasst Eingabemittel 102, wie zum Beispiel eine Tastatur, eine Maus, ein Pinpad, Mittel zur Erfassung von biometrischen Merkmalen, wie zum Beispiel einen Fingerabdruckscanner oder einen Irisscanner. Ferner umfasst das Datenverarbeitungssystem 100 einen Bildschirm 104 sowie eine Schnittstelle 106, welche zum Beispiel zur Kommunikation mit einem Netzwerk 120, wie dem Internet, verwendet werden kann. Ferner umfasst das Datenverarbeitungssystem 100 einen Prozessor 108, welcher dazu ausgebildet ist, ausführbare Instruktionen zur Durchführung von Verfahrensschritten auszuführen. Diese Instruktionen sind beispielsweise in Form eines Applets 112 im Speicher 110 enthalten.

Beispielsweise kann das Datenverarbeitungssystem 100 zur Erzeugung von asymmetrisch kryptografischen Schlüsselpaaren und zur anschließenden Verschlüsselung und Entschlüsselung von Datenobjekten sowie zur Erzeugung und Verifikation von digitalen Signaturen und für weitere kryptografische Operationen verwendet werden. Dies erfordert zunächst eine Berechnung von Schlüsselpaaren, was beispielsweise mittels des Moduls 114 des Applets 112 erfolgen kann. Zur Berechnung von Schlüsseln wird hierbei mittels des Moduls 114 wie folgt vorgegangen: Über die Eingabemittel 102 wird zunächst eine beliebig wählbare Benutzerkennung von einem Benutzer erhalten. Aus der Benutzerkennung wird daraufhin ein erster Datenobjektschlüssel berechnet, wobei in die Berechnung ein Zufallswert, welcher durch das Datenverarbeitungssystem 100 erzeugt wird, und die Benutzerkennung eingehen. Bei dem hier berechneten ersten Datenobjektschlüssel handelt es sich um einen privaten Schlüssel des Benutzers, wobei es möglich ist, dass zur Verwendung des ersten Datenobjektschlüssels in kryptografischen Anwendungen zusätzliche Parameter mit veröffentlicht werden müssen, um den ersten Datenobjektschlüssels für die Durchführung kryptografischer Operationen zu nutzen. Wie bereits oben angemerkt, ist es im Falle von elliptischen Kurven notwendig, zusätzlich zum ersten und zweiten Datenobjektschlüssel auch die Domainparameter der elliptischen Kurve zur Verfügung zu stellen, welche in Kombination mit dem ersten und zweiten Datenobjektschlüssel die Anwendung kryptografischer Operationen möglich macht. Ähnlich gilt für RSA, dass die natürliche Zahl *n* mit veröffentlicht werden muss, um kryptografische Operationen durchführen zu können.

Nach Berechnung des ersten Datenobjektschlüssels erfolgt eine Prüfung des Datenobjektschlüssels mittels des Prüfmoduls 116. Diese Prüfung dient einer Zulässigkeitsprüfung des ersten Datenobjektschlüssels, nämlich, ob der erzeugte erste Datenobjektschlüssel verschiedenen Sicherheitsaspekten genügt.

Beispielsweise wird bei elliptischen Kurven der öffentliche Schlüssel, d.h. der zweite Datenobjektschlüssel, aus dem ersten privaten Datenobjektschlüssel berechnet, indem ein Kurvenpunkt einer elliptischen Kurve mit dem geheimen Schlüssel multipliziert wird. In diesem Fall besteht die Zulässigkeitsprüfung des ersten Datenobjektschlüssels darin, zu prüfen, ob der erste Datenobjektschlüssel größer als 1 und kleiner als die Ordnung der elliptischen Kurve ist, wobei bei Erfüllung dieser Prüfbedingung der Zufallswert und der erste und zweite Datenobjektschlüssel zulässig sind. Ist dies jedoch nicht der Fall, muss ein neuer erster Datenobjektschlüssel und folglich auch ein neuer zweiter Datenobjektschlüssel berechnet werden, indem ein neuer Zufallswert gewählt wird und das Verfahren zur Schlüsselberechnung mittels des Moduls 114 sowie das Verfahren zur Prüfung der erzeugten Schlüssel mittels des Moduls 116 wiederholt durchgeführt wird.

Der zur Schlüsselberechnung verwendete Zufallswert wird daraufhin in einer Datenbank 132 abgelegt und gegebenenfalls verschlüsselt. Dies erfolgt beispielsweise so, dass für den entsprechenden Benutzer eine eindeutige Benutzeridentifikation vergeben wird, wobei dieser Benutzeridentifikation 124 in einer Tabelle der Datenbank 132 der zuvor erzeugte Zufallswert 128 zugeordnet wird. Im vorliegenden Beispiel der Figur 1 ist der Benutzerkennung "abc" der Zufallswert Z mit dem Wert "12345" zugeordnet. Wie bereits oben erwähnt, wird hier vorzugsweise der Zufallswert in verschlüsselter Form in der Datenbank 132 gespeichert, um zuverlässig Wörterbuchangriffe auf den ersten Datenobjektschlüssel zu verhindern.

In einer weiteren Datenbank 122 ist ebenfalls der Benutzeridentifikation 124 der mittels des Schlüsselberechnungsmoduls 114 erzeugte öffentliche Schlüssel 126 zugeordnet abgespeichert. Beispielsweise ist wiederum der Benutzeridentifikation "abc" der öffentliche Schlüssel "1 FF42B7" zugeordnet.

Im Folgenden sei angenommen, dass in einer Datenbank 134 ebenfalls der Benutzeridentifikation 124 zugeordnet ein Datenobjekt 130 verschlüsselt gespeichert ist. . Das Datenobjekt ist dabei mit dem öffentlichen Schlüssel 126 verschlüsselt, welcher in der Datenbank 122 abgelegt ist. Zur Entschlüsselung des Datenobjekts 130 wird nun wie folgt vorgegangen: Über die Eingabemittel 102 gibt ein Benutzer seine Benutzeridentifikation und die in der Benutzeridentifikation gewählte Benutzerkennung ein. Daraufhin erfolgt mittels des Moduls 114 die Berechnung des ersten Datenobjektschlüssels unter Verwendung des Zufallswertes 128, welcher anhand der Benutzeridentifikation 124 von der Datenbank 132 abgerufen wird. In diese Berechnung des ersten Datenobjektschlüssels gehen, wie bereits oben erwähnt, der Zufallswert 128 und die Benutzerkennung ein, welche zuvor über die Eingabemittel 102 in das Datenverarbeitungssystem eingegeben wurde.

Mittels des nun so erzeugten geheimen und privaten Datenobjektschlüssels ist es nun möglich, das Datenobjekt 130 zu entschlüsseln.

In einer Datenbank 135 kann zumindest eine Signatur 131 S_Objekt 1 des Datenobjekts sowie optional das Datenobjekt 130 selbst gespeichert sein. Das Datenobjekt 130 ist dabei mit dem geheimen Schlüssel signiert, welcher dem öffentlichen Schlüssel 126 zugeordnet ist. Die Verifikation der Signatur erfolgt dementsprechend mit dem öffentlichen Schlüssel 126.

An dieser Stelle sei angemerkt, dass die beliebig wählbare Benutzerkennung, welche über die Eingabemittel 102 in das Datenverarbeitungssystem 100 eingegeben wird, beispielsweise eine Zahlenkombination, eine Zahlen-Buchstaben-Kombination oder auch ein biometrisches Merkmal sein kann. Beispielsweise kann im Falle der Verwendung eines biometrischen Merkmals aus den biometrischen Daten eine Bitfolge in eindeutiger Weise berechnet werden, welche daraufhin als Benutzerkennung in die Schlüsselberechnung mittels des Moduls 114 eingehen kann.

Ferner sei angemerkt, dass insbesondere bei der Ver- und Entschlüsselung von medizinischen Datenobjekten durch das Datenverarbeitungssystem 100 beispielsweise wie folgt vorgegangen wird: Über die Schnittstelle 106 wird beispielsweise ein medizinisches Datenobjekt von einem bildgebenden medizinischen Instrument wie einem Röntgengerät empfangen. Röntgendaten sind typischerweise Bilddaten, welche umfangreiche Datenmengen darstellen. Das Datenverarbeitungssystem erzeugt einen zufälligen symmetrischen Schlüssel, mit welchem diese medizinischen Röntgendaten verschlüsselt werden. Daraufhin werden diese verschlüsselten Daten auf der Datenbank 134 mit der eindeutigen Benutzeridentifikation 124 assoziiert abgelegt. Daraufhin erfolgt eine Verschlüsselung des erzeugten symmetrischen Schlüssels mit dem öffentlichen Schlüssel 126. Dieser so verschlüsselte symmetrische Schlüssel wird ebenfalls auf der Datenbank 134 mit der Benutzeridentifikation 124 und den verschlüsselten Daten assoziiert abgelegt.

Zur Entschlüsselung wird nun der verschlüsselte symmetrische Schlüssel mittels des Kryptografiemoduls 118 entschlüsselt, indem der entsprechende private Schlüssel unter Verwendung der Benutzerkennung wie oben beschrieben erzeugt und für die Entschlüsselung verwendet wird. Mit dem so erhaltenen symmetrischen Schlüssel ist es daraufhin möglich, das verschlüsselte Datenobjekt 130 zu entschlüsseln.

Vorzugsweise werden Datenobjekte 130 in der Datenbank 134 jeweils einzeln verschlüsselt abgespeichert. Selbst im Falle eines Satzes von semantisch zusammengehörenden Datenobjekten wird vorzugsweise jedes einzelne Datenobjekt für sich verschlüsselt in der Datenbank 134 abgespeichert, so dass im Falle eines Abrufens eines einzelnen Datenobjekts eine Übertragung dieses verschlüsselten Datenobjekts 130 an das Datenverarbeitungssystem 100 erfolgt, woraufhin dort seine Entschlüsselung vorgenommen wird. Würde man im Gegensatz dazu für semantisch zusammengehörende Datenobjekte, die in einem einzigen Datenobjekt zusammengefasst, verschlüsselt und abgespeichert wären, aus Gründen der Minimierung des zu transportierenden Datenvolumens die Entschlüsselung in der Datenbank vornehmen, so hätte der Betreiber Zugriff auf die entschlüsselten Datenobjekte. Dahingegen hat die oben beschriebene Vorgehensweise den Vorteil, dass zu keinem Zeitpunkt die Datenbank 134, bzw. deren Betreiber Zugriff auf entschlüsselte Schlüssel oder Datenobjekte erhält.

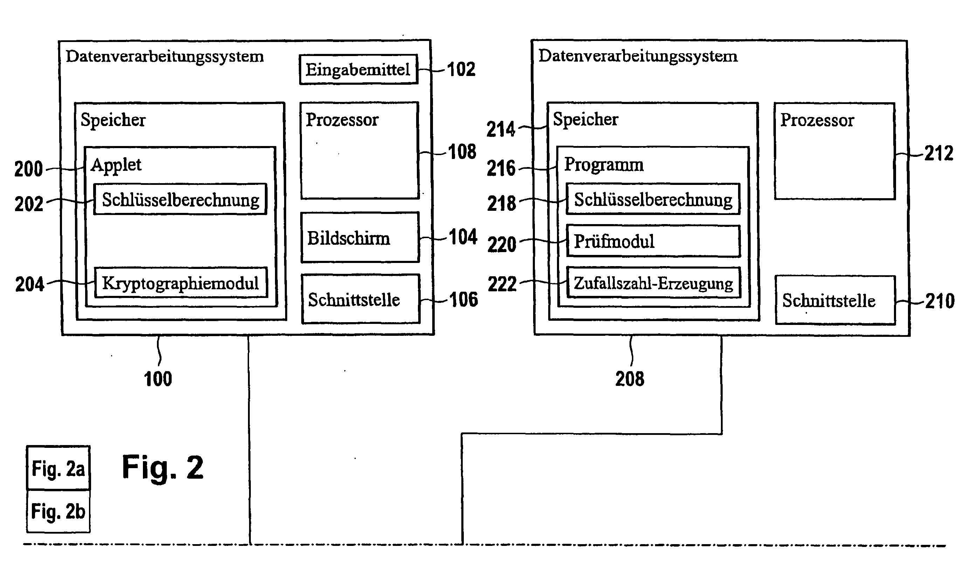

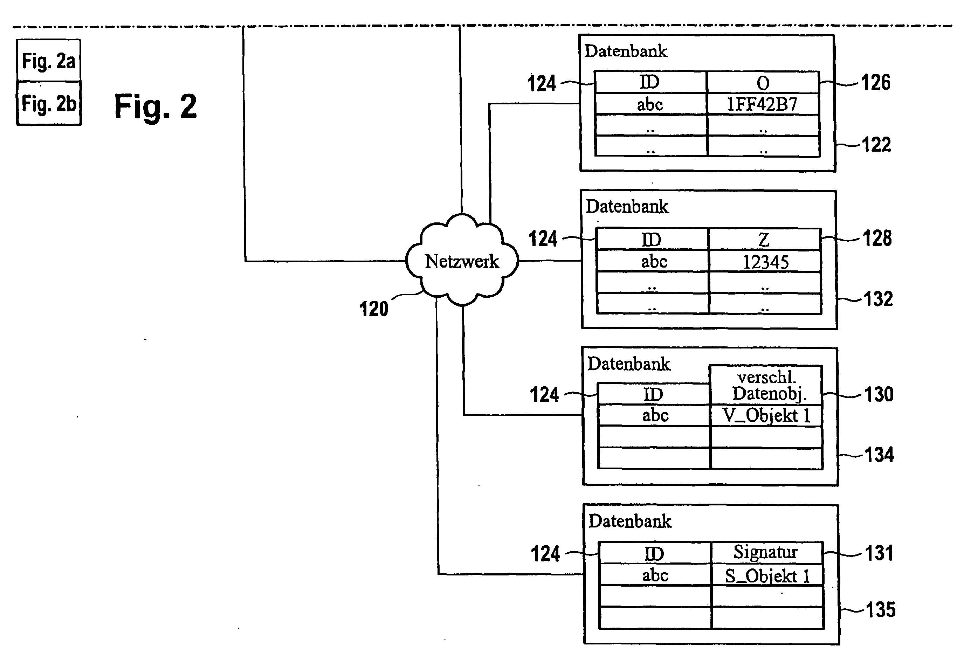

Die Figur 2 zeigt eine weitere Ausführungsform von Datenverarbeitungssystemen, welche zur Erzeugung von asymmetrischen Schlüsselpaaren und zur Durchführung von kryptografischen Operationen verwendet werden können. Im Unterschied zur Figur 1 sind in der Figur 2 zwei voneinander unabhängige Datenverarbeitungssysteme 100 und 208 gezeigt. Das Datenverarbeitungssystem 100 weist im vorliegenden Fall der Figur 2 ein Applet 200 auf, welches zum Beispiel über das Netzwerk 120 von dem Datenverarbeitungssystem 208 über dessen Schnittstelle 210 geladen werden kann. Das Applet beinhaltet Softwaremodule zur Schlüsselberechnung 202 und ein Kryptografiemodul 204.

Das Datenverarbeitungssystem 208 weist einen Prozessor 212 auf, welcher dazu ausgebildet ist, um computerausführbare Instruktionen in Form von Softwaremodulen eines im Speicher 214 enthaltenen Programms 216 abzuarbeiten. Das Programm 216 weist ein Modul zur Schlüsselberechnung 218, ein Prüfmodul 220 und ein Modul zur Zufallszahlerzeugung 222 auf.

Des Weiteren sind in der Figur 2 die Datenbanken 122, 132, 134 und 135 gezeigt, welche über das Netzwerk 120 mit der Schnittstelle 106 des Datenverarbeitungssystems 100 und der Schnittstelle 210 des Datenverarbeitungssystems 208 gekoppelt sind.

Vorzugsweise handelt es sich bei dem Datenverarbeitungssystem 208 um ein Datenverarbeitungssystem einer vertrauenswürdigen Stelle. Damit läuft das Programm 216 mit seinen Modulen in einer sicheren Umgebung ab, sodass gewährleistet ist, dass unbefugte Dritte keinen Eingriff in die Schlüsselberechnung mittels des Moduls 218 sowie der Zufallszahlerzeugung mittels des Moduls 222 erlangen können.

Im Folgenden sei angenommen, dass für einen neuen Benutzer unter Verwendung von elliptischen Kurven ein asymmetrisches Schlüsselpaar erzeugt werden muss. Zu diesem Zweck gibt der Benutzer mittels der Eingabemittel 102 eine frei wählbare Benutzerkennung ein. Diese Benutzerkennung wird daraufhin in das Datenverarbeitungssystem 208 übertragen, welches mittels des Moduls 218 zur Schlüsselberechnung einen entsprechenden geheimen Schlüssel sowie einen öffentlichen Schlüssel berechnet. Zur Berechnung des geheimen privaten Schlüssels findet das Modul 222 zur Zufallszahlerzeugung Anwendung, wobei der private Schlüssel dadurch berechnet wird, dass zunächst die Funktion *g* auf die Benutzerkennung und daraufhin die Funktion *f* auf den Zufallswert, welcher mittels des Moduls 222 erzeugt wurde, und das Ergebnis von *g*(Benutzerkennung) angewendet wird. Dies ergibt den privaten Datenobjektschlüssel. Zur Berechnung des öffentlichen Datenobjektschlüssels wird weiterhin mittels des Moduls 218 der erste Schlüssel mit einem Kurvenpunkt einer elliptischen Kurve multipliziert. Wie bereits näher in der Figur 1 erläutert, werden der erzeugte Zufallswert sowie der öffentliche Schlüssel in entsprechenden Datenbanken abgespeichert. Das Prüfmodul 220 dient dazu, um zu überprüfen, ob der berechnete private Schlüssel den nötigen Sicherheitsbedingungen genügt.

Zu der oben genannten Vorgehensweise zur Schlüsselberechnung gibt es verschiedene Alternativen. Beispielsweise ist es möglich, bereits im Datenverarbeitungssystem 100 mittels des Kryptografiemoduls 204 die Funktion *g* auf die eingegebene Benutzerkennung anzuwenden. Daraufhin wird in diesem Fall der Wert g(Benutzerkennung) an das Datenverarbeitungssystem 208 zur Weiterverwendung durch das Modul 218 zur Schlüsselberechnung übertragen.

Ebenso ist es nicht zwingend notwendig, den öffentlichen Schlüssel 126 in einer Datenbank 122 zu speichern. Beispielsweise ist es hier möglich, dass der öffentliche Schlüssel 126 überhaupt nicht gespeichert wird. Durch die Verwendung der Benutzerkennung und des anhand der Benutzeridentifikation abrufbaren Zufallswertes 128 ist es jederzeit möglich, durch das Modul zur Schlüsselberechnung 202 bzw. 218 den öffentlichen Schlüssel 126 zu erzeugen. Allerdings stellt dies einen zusätzlichen Rechenaufwand dar, welcher durch Ablegen des öffentlichen Schlüssels in der Datenbank 122 umgangen werden kann. Zudem ist in diesem Fall die Verifikation digitaler Signaturen unmöglich. Die Verwendung der Datenbank 122 stellt dabei in keiner Weise ein Sicherheitsrisiko dar, da sich aus dem öffentlichen Schlüssel 126 der zur Entschlüsselung benötigte asymmetrische private Schlüssel nicht berechnen lässt. Außerdem hat die Verwendung einer Datenbank 122 mit öffentlichen Schlüsseln den Vorteil, dass ein Benutzer des Datenverarbeitungssystems 100, z.B. ein Arzt, jederzeit in der Lage ist, medizinische Datenobjekte verschlüsselt in der Datenbank 134 abzulegen und darüberhinaus, dass ein anderer Benutzer des Datenverarbeitungssystems 100, z.B. ein Patient, jederzeit in der Lage ist, die digitale Signatur 131 abgerufener Objekte, die von anderen Benutzern, z.B. Ärzten, für ihn in der Datenbank 135 eingestellt wurde, zu verifizieren.

Für das Einstellen von medizinischen Datenobjekten durch Ärzte ist üblicherweise ein Einverständnis eines Patienten nicht erforderlich. Das Einverständnis des Patienten wird erst dann erforderlich, wenn es um das Abrufen von gespeicherten medizinischen Informationen bezüglich des Patienten selbst geht. Dies ist jedoch, wie bereits oben gezeigt, nur dann möglich, wenn der Patient seine aktive Einwilligung in Form der Eingabe seiner Benutzerkennung erteilt.

Es sei noch angemerkt, dass die Verwendung der Datenbanken 122, 132, 134 und 135 in der Figur 2 nicht zwingend so gegeben sein muss, wie in der Figur 2 gezeigt. Die Datenbanken 122, 132, 134 und 135 können beispielsweise ineinander integriert sein oder sie können auch als externe Datenbanken von Dienstleistem zur Verfügung gestellt werden. Das Datenverarbeitungssystem 208 kann ein zentraler Server sein und die Datenbanken 122 und 132, sowie das Datenverarbeitungssystem, können Teil einer Public Key-Infrastruktur sein.

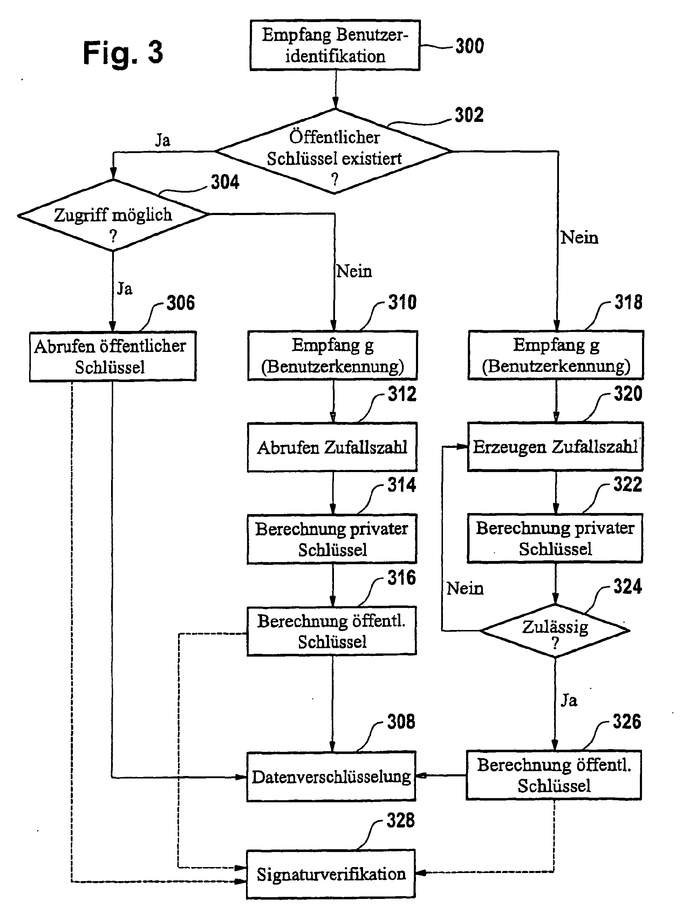

Die Figur 3 zeigt das erfindungsgemäße Verfahren zur Erzeugung eines asymmetrischen Schlüsselpaares und seiner beispielhaften Verwendung zur Verschlüsselung von Datenobjekten und zur Verifikation digitaler Signaturen von Datenobjekten. In Schritt 300 wird eine eindeutige Benutzeridentifikation empfangen. Daraufhin erfolgt in Schritt 302 eine Überprüfung, ob ein öffentlicher Schlüssel existiert, welcher der in Schritt 300 empfangenen Benutzeridentifikation zugeordnet ist. Ist dies der Fall, wird in Schritt 304 überprüft, ob ein Zugriff auf diesen öffentlichen Schlüssel möglich ist. Ist dies möglich, wird in Schritt 306 der öffentliche Schlüssel abgerufen, und das Datenobjekt kann beispielsweise im Schritt 308 mittels des öffentlichen Schlüssels verschlüsselt werden oder es kann im Schritt 328 die digitale Signatur eines Datenobjekts verifiziert werden.

Ergibt die Prüfung in Schritt 304 hingegen, dass ein Zugriff auf den öffentlichen Schlüssel nicht möglich ist, dann muss der öffentliche Schlüssel erzeugt werden. Dies erfolgt beginnend mit Schritt 310, in welchem entweder eine frei wählbare Benutzerkennung empfangen und die Funktion *g* auf diese Benutzerkennung angewendet wird oder es wird bereits der Wert *g*(Benutzerkennung) empfangen. Daraufhin folgt Schritt 312, in welchem ein Zufallswert von einer entsprechenden Datenbank anhand der Benutzeridentifikation abgerufen wird. Durch Anwendung der Funktion *f* auf den Zufallswert und g(Benutzerkennung) erfolgt im Schritt 314 die Berechnung des privaten Schlüssels. Aus dem privaten Schlüssel wird schließlich in Schritt 316 der öffentliche Schlüssel berechnet, wobei der private und der öffentliche Schlüssel ein asymmetrisches kryptografisches Schlüsselpaar bilden.

Die Berechnung des öffentlichen Schlüssels im Schritt 316 erfolgt beispielsweise bei elliptischen Kurven dadurch, dass der öffentliche Schlüssel durch Multiplikation des privaten Schlüssels mit einem Kurvenpunkt einer elliptischen Kurve berechnet wird. Dem Verwender des Verschlüsselungsverfahrens der Figur 3 muss in diesem Fall ein Teil der zur Erzeugung des öffentlichen Schlüssels verwendeten Domainparameter bekannt sein.

Nach Berechnung des öffentlichen Schlüssels in Schritt 316 erfolgt wiederum in Schritt 308 eine Verschlüsselung des Datenobjektes mittels des öffentlichen Schlüssels oder in Schritt 328 die Verifikation einer digitalen Signatur eines Datenobjekts.

Ergibt sich im Prüfschritt 302, dass kein öffentlicher Schlüssel existiert, so erfordert dies eine initiale Erzeugung eines asymmetrischen Schlüsselpaars. Dies geschieht, indem in Schritt 318 entweder eine frei wählbare Benutzerkennung empfangen und die Funktion *g* auf diese Benutzerkennung angewendet wird oder es wird bereits der Wert g(Benutzerkennung) empfangen.

Daraufhin erfolgt in Schritt 320 die Erzeugung einer Zufallszahl, woraufhin in Schritt 322, wie bereits für Schritt 314 beschrieben, ein Kandidat für einen privaten Schlüssel erzeugt wird, indem die Funktion *f* auf g(Benutzerkennung) und die Zufallszahl angewendet wird.

In Schritt 324 erfolgt eine Zulässigkeitsprüfung, welche beispielsweise im Falle des elliptischen Kurvenverfahrens aus der Prüfung, ob der private Datenobjektschlüssel größer als 1 und kleiner als die Ordnung der elliptischen Kurve ist, besteht. Wird die Zulässigkeitsprüfung bestanden, so sind in Schritt 324 der Zufallswert sowie der private Schlüssel zulässig. Daraufhin kann in Schritt 326 die Berechnung des öffentlichen Schlüssels durchgeführt werden, worauf beispielsweise in Schritt 308 die Datenverschlüsselung oder in Schritt 328 die Verifikation der digitalen Signatur erfolgt.

Stellt sich hingegen in Schritt 324 heraus, dass der in Schritt 322 berechnete Kandidat für einen privaten Datenobjektschlüssel nicht zulässig ist, dann wird in Schritt 320 erneut eine Zufallszahl erzeugt, woraufhin die Schritte 322 und 324 wiederum durchgeführt werden. Dies geschieht so lange, bis die Zulässigkeitsprüfung in Schritt 324 erfolgreich ist, woraufhin der Schritt 326 mit der Berechnung des öffentlichen Schlüssels und beispielsweise der Schritt 308 mit der Datenverschlüsselung oder der Schritt 328 mit der Verifikation der digitalen Signatur durchgeführt werden.

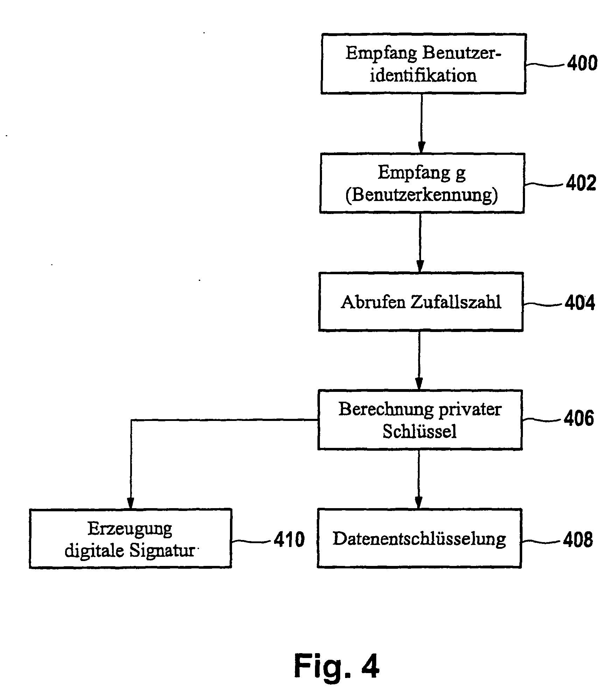

In der Figur 4 ist nun angenommen, dass, wie in der Figur 3 gezeigt, in Schritt 322 der private Schlüssel berechnet wurde und in Schritt 326 beispielsweise unter Verwendung einer elliptischen Kurve der öffentliche Schlüssel berechnet wurde. Die Figur 4 zeigt ein Verfahren zur Entschlüsselung eines Datenobjekts bzw. zur Erzeugung einer digitalen Signatur. Das Verfahren beginnt mit Schritt 400, dem Empfang einer eindeutigen Benutzeridentifikation. Daraufhin wird in Schritt 402 entweder eine Benutzerkennung empfangen und darauf die Funktion *g* angewendet oder es wird direkt *g*(Benutzerkennung) empfangen. Unter Verwendung der Benutzeridentifikation wird in Schritt 404 von einer externen Datenbank eine Zufallszahl abgerufen, woraus unter Verwendung der Funktion *f* in Schritt 406 ein privater Schlüssel berechnet werden kann. Dieser private Schlüssel kann nun dazu verwendet werden, um die mit dem öffentlichen Datenobjektschlüssel verschlüsselten Daten in Schritt 408 zu entschlüsseln oder in Schritt 410 eine digitale Signatur zu erzeugen.

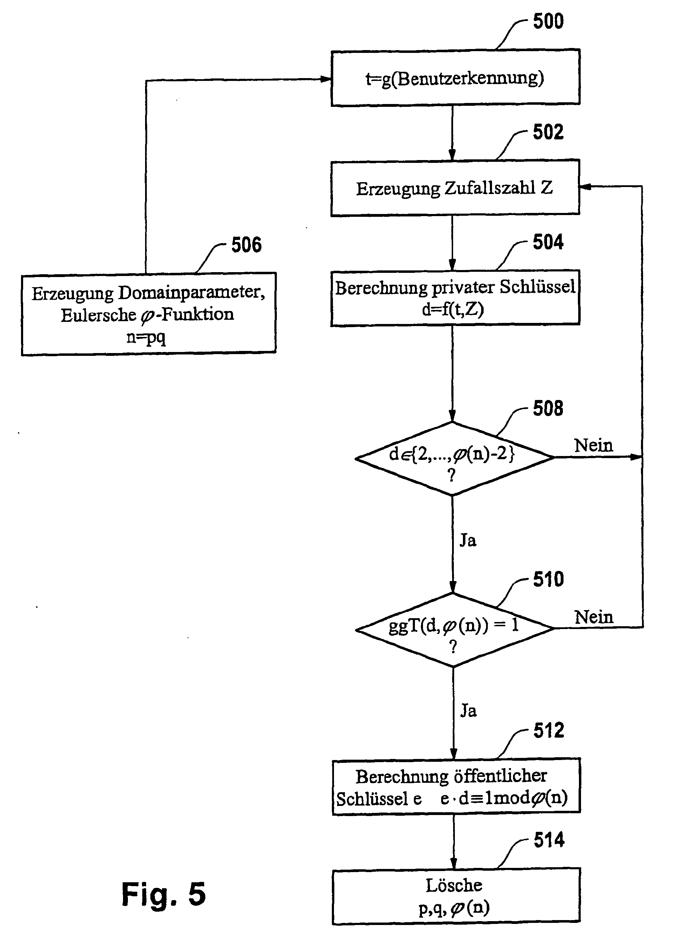

Die Figur 5 zeigt ein Flussdiagramm eines Verfahrens zur Berechung eines asymmetrischen Schlüsselpaares nach dem RSA-Verfahren. Das Verfahren beginnt mit Schritt 506, in dem zwei Primzahlen *p* und *q* gemäß den aktuellen Sicherheitsanforderungen für RSA gewählt werden. Die beiden Zahlen werden miteinander multipliziert und das Ergebnis *n* genannt. Auf *n* wird anschließend die Eulersche ϕ-Funktion angewendet, so dass man den Wert ϕ(*n*) erhält.

Im folgenden Schritt 500 wird eine Benutzerkennung empfangen, auf die die Funktion *g* angewendet wird, oder es wird direkt der Funktionswert *g*(Benutzerkennung) empfangen. Darauf folgt Schritt 502, in welchem ein Zufallswert erzeugt wird. Durch Anwendung der Funktion *f* auf den Zufallswert und g(Benutzerkennung) erfolgt im Schritt 504 die Berechnung eines Kandidaten für den privaten Schlüssel *d*.

In Schritt 508 erfolgt eine Zulässigkeitsprüfung, wobei die Zulässigkeitsprüfung im Falle des RSA Verfahrens mehrstufig verläuft. So wird zunächst in Schritt 508 geprüft, ob *d* im Intervall [2, ϕ(*n*) - 2] liegt.

Ergibt der Prüfschritt 508, dass die Prüfbedingung nicht erfüllt ist, springt das Verfahren zu Schritt 502 zurück, wo ein neuer Zufallswert erzeugt wird. Daraufhin folgen wiederum die Schritte 504 mit dem erneuten Berechnen eines Kandidaten für den privaten Schlüssel *e* anhand des neuen Zufallswerts und dem erneuten Prüfen des Kandidaten *d* in Schritt 508. Diese Schleife der Schritte 502, 504 und 508 wiederholt sich so lange, bis die Prüfbedingung in Schritt 508 erfüllt ist. Erst dann setzt sich das Verfahren mit Schritt 510 fort.

Schritt 510 umfasst einen weiteren Prüfschritt, nämlich ob *ϕ*(*n*) und der Schlüsselkandidat *d* teilerfremd sind, d.h *ggT(d, ϕ(n))* = *1*. Ist dies nicht der Fall, springt das Verfahren wieder zurück zu Schritt 502 und ein neuer Zufallswert wird erzeugt, gefolgt von den Schritten 504, 508, 510. Auch diese Schleife der Schritte 502, 504, 508 und 510 wiederholt sich so lange, bis die Prüfbedingung in Schritt 510 erfüllt ist. Erst dann setzt sich das Verfahren mit Schritt 512 fort. Vorzugsweise wird der Prüfschritt 508 vor dem Prüfschritt 510 durchgeführt, da der Rechenaufwand für Schritt 508 wesentlich geringer ist als der Rechenaufwand für Schritt 510.

In Schritt 512 erfolgt schließlich die Berechnung des öffentlichen Schlüssels *e*, so dass *e* die Kongruenz-Beziehung *e* - *d* ≡ 1 mod ϕ(*n*) mit e ∈ [1, ϕ(n) - 1] erfüllt. Zur Verwendung des privaten Schlüssels d in kryptografischen Verfahren muss auch *n* bekannt gegeben werden.

Im abschließenden Schritt 514 werden die Zahlen *p*, *q,* und ϕ (*n*) verworfen, d.h. gelöscht.

Neben den Prüfschritten 508 und 510 können weitere Prüfschritte zum Einsatz kommen, um so die Sicherheit des erzeugten asymmetrischen Schlüsselpaares zu erhöhen.

### Bezugszeichenliste

- 100: Datenverarbeitungssystem
- 102: Eingabemittel
- 104: Bildschirm
- 106: Schnittstelle
- 108: Prozessor
- 110: Speicher
- 112: Applet
- 114: Modul
- 116: Modul
- 118: Modul
- 120: Netzwerk
- 122: Datenbank
- 124: Benutzeridentifikation
- 126: öffentlicher Schlüssel
- 128: Zufallszahl
- 130: verschlüsseltes Datenobjekt
- 131: digitale Signatur
- 132: Datenbank
- 134: Datenbank
- 135: Datenbank
- 200: Applet
- 202: Modul
- 204: Modul
- 208: Datenverarbeitungssystem
- 210: Schnittstelle
- 212: Prozessor
- 214: Speicher
- 216: Programm
- 218: Modul
- 220: Modul
- 222: Modul

## Patentansprüche

1. Verfahren zur benutzerkennungsbasierten Erzeugung eines asymmetrischen kryptografischen Schlüsselpaars, wobei das Verfahren umfasst:
- Empfang einer eindeutigen Benutzeridentifikation (124) und einer der Benutzeridentifikation (124) zugeordneten beliebig wählbaren Benutzerkennung,
- Berechnung eines Funktionswertes *g*(Benutzerkennung) durch Anwendung einer Funktion g auf die Benutzerkennung, wobei *g* vorzugsweise eine Einwegfunktion ist,
- Erzeugen eines Zufallswertes (128),
- Berechnen eines ersten Datenobjektschlüssels durch Anwenden einer Funktion *f* auf den Zufallswert (128) und den Funktionswert *g*(Benutzerkennung),
- Berechnen eines zweiten Datenobjektschlüssels aus dem ersten Datenobjektschlüssel, wobei der erste und der zweite Datenobjektschlüssel ein asymmetrisches Schlüsselpaar bilden,
wobei das Verfahren des weiteren umfasst:
a) Durchführen einer Zulässigkeitsprüfung (220) des ersten Datenobjektschlüssels mittels Prüfbedingungen, wobei die Prüfbedingungen die Verwendbarkeit des ersten Datenobjektschlüssels zur Erzeugung des zweiten Datenobjektschlüssels aus dem ersten Datenobjektschlüssel mittels eines asymmetrischen kryptografischen Schlüsselerzeugungsverfahrens umfasst,
b) wenn die Prüfbedingungen erfüllt sind, Berechnen des zweiten Datenobjektschlüssels aus dem ersten Datenobjektschlüssel,
c) wenn eine der Prüfbedingungen nicht erfüllt ist, erneutes Berechnen eines neuen ersten Datenobjektschlüssels mit einem neuen Zufallswert (128) und erneutes Durchführen des Schritts a).

2. Verfahren nach Anspruch 1, wobei das asymmetrische Schlüsselpaar für ein Kryptosystem gebildet wird, beispielsweise für elliptischen Kurven, RSA, DLP oder ein anderes Kryptosystem.

3. Verfahren zur Anwendung eines asymmetrischen kryptografischen Schlüsselpaares, welches nach einem Verfahren gemäß Anspruch 1 oder 2 erzeugt wurde, wobei das Verfahren ein oder mehrere der folgenden Schritte umfasst:
- Verschlüsseln eines Datenobjekts mit dem zweiten Datenobjektschlüssel des Schlüsselpaars,
- Entschlüsseln eines Datenobjekts mit dem ersten Datenobjektschlüssel des Schlüsselpaars,
- Erzeugung einer digitalen Signatur zu einem Datenobjekt mit dem ersten Datenobjektschlüssel des Schlüsselpaars,
- Verifikation einer digitalen Signatur zu einem Datenobjekt mit dem zweiten Datenobjektschlüssel des Schlüsselpaars,
- Durchführung anderer kryptografischer Operationen mit den Datenobjektschlüsseln des Schlüsselpaars.

4. Computerprogrammprodukt (114; 116; 218; 220; 222) mit von einem Prozessor ausführbaren Instruktionen zur Durchführung von Verfahrensschritten zur Erzeugung eines asymmetrischen Schlüsselpaares, wobei das Verfahren die folgenden Schritte umfasst:
- Empfang einer beliebig wählbaren Benutzerkennung,
- Berechnen eines ersten Datenobjektschlüssels, wobei in die Berechnung ein Zufallswert (128) und die Benutzerkennung eingeht,
- Berechnen eines zweiten Datenobjektschlüssels aus dem ersten Datenobjektschlüssel mittels eines asymmetrischen kryptografischen Schlüsselerzeugungsverfahrens, wobei der erste und der zweite Datenobjektschlüssel das asymmetrische kryptografische Schlüsselpaar bilden,
wobei das Verfahren des weiteren umfasst:
a) Durchführen einer Zulässigkeitsprüfung (220) des ersten Datenobjektschlüssels mittels Prüfbedingungen, wobei die Prüfbedingungen die Verwendbarkeit des ersten Datenobjektschlüssels zur Erzeugung des zweiten Datenobjektschlüssels aus dem ersten Datenobjektschlüssel mittels eines asymmetrischen kryptografischen Schlüsselerzeugungsverfahrens umfasst,
b) wenn die Prüfbedingungen erfüllt sind, Berechnen des zweiten Datenobjektschlüssels aus dem ersten Datenobjektschlüssel,
c) wenn eine der Prüfbedingungen nicht erfüllt ist, erneutes Berechnen eines neuen ersten Datenobjektschlüssels mit einem neuen Zufallswert (128) und erneutes Durchführen des Schritts a).

5. Computerprogrammprodukt nach Anspruch 4, wobei die Berechnung des ersten Datenobjektschlüssels unter Verwendung einer Funktion g, die auf die Benutzerkennung angewendet wird, erfolgt, wobei es sich bei der Funktion g vorzugsweise um eine Einwegfunktion, wie z.B. eine kryptografische Hash-Funktion, handelt.

6. Computerprogrammprodukt nach Anspruch 4, wobei die Benutzerkennung als Funktionswert einer Funktion g, die auf die Benutzerkennung angewendet wurde, empfangen wird, wobei es sich bei der Funktion g vorzugsweise um eine Einwegfunktion, wie z.B. eine kryptografische Hash-Funktion, handelt.

7. Computerprogrammprodukt nach einem der vorigen Ansprüche 4 bis 6, wobei der erste Datenobjektschlüssel berechnet wird durch Anwenden einer Funktion *f* auf den Zufallswert (128) und *g*(Benutzerkennung).

8. Computerprogrammprodukt nach Anspruch 7, wobei es sich bei der Funktion *f* um eine Einwegfunktion handelt, z.B. eine kyptografische Hash-Funktion.

9. Computerprogrammprodukt nach einem der vorigen Ansprüche 4 bis 8, wobei es sich bei dem asymmetrischen kryptografischen Schlüsselerzeugungsverfahren um ein Verfahren auf elliptischen Kurven handelt, wobei der zweite Schlüssel durch Multiplikation des ersten Schlüssels mit einem Kurvenpunkt einer elliptischen Kurve berechnet wird.

10. Computerprogrammprodukt nach Anspruch 9, wobei es sich bei der Prüfbedingung um die Bedingung handelt, dass der erste Datenobjektschlüssel größer als eins und kleiner als die Ordnung der elliptischen Kurve ist.

11. Computerprogrammprodukt nach einem der Ansprüche 9 oder 10, wobei es sich bei der Prüfbedingung um die Bedingung handelt dass die Bitlänge des Zufallswerts größer oder gleich der Bitlänge der Ordnung der elliptischen Kurve ist.

12. Computerprogrammprodukt nach einem der Ansprüche 9 bis 11, wobei es sich bei der Prüfbedingung um die Bedingung handelt, dass der Zufallswert (128) so gewählt ist, dass der Wert des erzeugten ersten Datenobjektschlüssels kleiner als die Ordnung der elliptischen Kurve ist.

13. Computerprogrammprodukt nach einem der Ansprüche 4 bis 8, wobei es sich bei dem asymmetrischen kryptografischen Schlüsselerzeugungsverfahren um ein RSA-Verfahren handelt, wobei es sich bei der Prüfbedingung um die Bedingung handelt, dass die Eulersche ϕ-Funktion des für das RSA-Schlüsselerzeugungsverfahren verwendeten Modulus *n* und der erste Schlüssel teilerfrernd sind.

14. Computerprogrammprodukt nach Anspruch 13, wobei es sich bei der Prüfbedingung ferner um die Bedingung handelt, dass der erste Datenobjektschlüssel einen Wert zwischen 2 und den Wert der Eulerschen ϕ-Funktion des für das RSA-Schlüsselerzeugungsverfahren verwendeten Modulus *n* minus 2 aufweist.

15. Computerprogrammprodukt nach einem der vorigen Ansprüche 4 bis 14, wobei der Zufallswert (128) von einer Datenbank (132) abgerufen wird, wobei der Zufallswert (128) eindeutig der Benutzeridentifikation (124) zugeordnet ist.

16. Computerprogrammprodukt nach einem der vorigen Ansprüche 4 oder 15, wobei der Zufallswert (128) verschlüsselt in der Datenbank abgespeichert ist.

17. Computerprogrammprodukt nach einem der vorigen Ansprüche 4 bis 16, wobei das Computerprogrammprodukt durch ein Applet (112) oder ein Browser-Plugin ausgebildet ist, oder eine eigenständige Anwendung ist, die auf einem Rechner einer vertrauenswürdigen Stelle läuft oder eine eingebettete Anwendung ist, die in einem gesicherten Hardware-Modul läuft.

18. Datenverarbeitungssystem (100; 208) zur Erzeugung eines asymmetrischen kryptografischen Schlüsselpaares, wobei das Datenverarbeitungssystem folgendes umfasst::
- Mittel (102) zum Empfang einer beliebig wählbaren Benutzerkennung,
- Mittel (114; 218; 116; 220; 222) zum Berechnen eines ersten Datenobjektschlüssels, wobei in die Berechnung ein Zufallswert (128) und die Benutzerkennung eingeht,
- Mittel (114; 218) zum Berechnen eines zweiten Datenobjektschlüssels aus dem ersten Datenobjektschlüssel mittels eines asymmetrischen kryptografischen Schlüsselerzeugungsverfahrens, wobei der erste und der zweite Datenobjektschlüssel das asymmetrische kryptografische Schlüsselpaar bilden,
wobei das Datenverarbeitungssystem des weiteren Mittel zum Durchführen der folgenden Verfahrensschritte umfasst:
a) Durchführen einer Zulässigkeitsprüfung (220) des ersten-Datenobjektschlüssels mittels Prüfbedingungen, wobei die Prüfbedingungen die Verwendbarkeit des ersten Datenobjektschlüssels zur Erzeugung des zweiten Datenobjektschlüssels aus dem ersten Datenobjektschlüssel mittels eines asymmetrischen kryptografischen Schlüsselerzeugungsverfahrens umfasst,
b) wenn die Prüfbedingungen erfüllt sind, Berechnen des zweiten Datenobjektschlüssels aus dem ersten Datenobjektschlüssel,
c) wenn eine der Prüfbedingungen nicht erfüllt ist, erneutes Berechnen eines neuen ersten Datenobjektschlüssels mit einem neuen Zufallswert (128) und erneutes Durchführen des Schritts a).

## Claims

1. Method for generating an asymmetrical cryptographic key pair on the basis of a user identifier, the method comprising:
- receiving a unique user identification (124) and an arbitrarily selectable user identifier associated with the user identification (124),
- calculating a function value g(user identifier) by applying a function g to the user identifier, *g* preferably being a one-way function,
- generating a random value (128),
- calculating a first data object key by applying a function *f* to the random value (128) and to the function value g(user identifier),
- calculating a second data object key from the first data object key, the first and second data object keys forming an asymmetrical key pair,
the method also comprising:
a) carrying out an admissibility check (220) on the first data object key by means of check conditions, the check conditions comprising the usability of the first data object key to generate the second data object key from the first data object key using an asymmetrical cryptographic key generation method,
b) calculating the second data object key from the first data object key if the check conditions have been satisfied,
c) recalculating a new first data object key with a new random value (128) and carrying out step a) again if one of the check conditions has not been satisfied.

2. Method according to Claim 1, the asymmetrical key pair being formed for a Kryptosystem, for example for elliptical curves, RSA, DLP or another cryptosystem.

3. Method for using an asymmetrical cryptographic key pair generated in accordance with a method according to Claim 1 or 2, the method comprising one or more of the following steps:
- encrypting a data object using the second data object key of the key pair,
- decrypting a data object using the first data object key of the key pair,
- generating a digital signature for a data object using the first data object key of the key pair,
- verifying a digital signature for a data object using the second data object key of the key pair,
- carrying out other cryptographic operations using the data object keys of the key pair.

4. Computer program product (114; 116; 218; 220; 222) having instructions which can be executed by a processor and are intended to carry out method steps for generating an asymmetrical key pair, the method comprising the following steps of:
- receiving an arbitrarily selectable user identifier,
- calculating a first data object key, a random value (128) and the user identifier being included in the calculation,
- calculating a second data object key from the first data object key using an asymmetrical cryptographic key generation method, the first and second data object keys forming the asymmetrical cryptographic key pair,
the method also comprising:
a) carrying out an admissibility check (220) on the first data object key by means of check conditions, the check conditions comprising the usability of the first data object key to generate the second data object key from the first data object key using an asymmetrical cryptographic key generation method,
b) calculating the second data object key from the first data object key if the check conditions have been satisfied,
c) recalculating a new first data object key with a new random value (128) and carrying out step a) again if one of the check conditions has not been satisfied.

5. Computer program product according to Claim 4, the first data object key being calculated using a function g which is applied to the user identifier, the function g preferably being a one-way function, for example a cryptographic hash function.

6. Computer program product according to Claim 4, the user identifier being received as a function value of a function g which was applied to the user identifier, the function g preferably being a one-way function, for example a cryptographic hash function.

7. Computer program product according to one of the preceding Claims 4 to 6, the first data object key being calculated by applying a function f to the random value (128) and g(user identifier).

8. Computer program product according to Claim 7, the function f being a one-way function, for example a cryptographic hash function.

9. Computer program product according to one of the preceding Claims 4 to 8, the asymmetrical cryptographic key generation method being a method on elliptical curves, the second key being calculated by multiplying the first key by a curve point on an elliptical curve.

10. Computer program product according to Claim 9, the check condition being the condition that the first data object key is greater than one and less than the order of the elliptical curve.

11. Computer program product according to either of Claims 9 and 10, the check condition being the condition that the bit length of the random value is greater than or equal to the bit length of the order of the elliptical curve.

12. Computer program product according to one of Claims 9 to 11, the check condition being the condition that the random value (128) is selected in such a manner that the value of the first data object key generated is less than the order of the elliptical curve.

13. Computer program product according to one of Claims 4 to 8, the asymmetrical cryptographic key generation method being an RSA method, the check condition being the condition that the Euler's ϕ function of the modulus n used for the RSA key generation method and the first key are co-prime.

14. Computer program product according to Claim 13, the check condition also being the condition that the first data object key has a value of between 2 and the value of the Euler's ϕ function of the modulus n used for the RSA key generation method minus 2.

15. Computer program product according to one of the preceding Claims 4 to 14, the random value (128) being retrieved from a database (132), the random value (128) being uniquely associated with the user identification (124).

16. Computer program product according to either of the preceding Claims 4 and 15, the random value (128) being stored in encrypted form in the database.

17. Computer program product according to one of the preceding Claims 4 to 16, the computer program product being formed by an applet (112) or a browser plug-in or being an independent application which runs on a computer in a trustworthy centre, or being an embedded application which runs in a secure hardware module.

18. Data processing system (100; 208) for generating an asymmetrical cryptographic key pair, the data processing system comprising the following:
- means (102) for receiving an arbitrarily selectable user identifier,
- means (114; 218; 116; 220; 222) for calculating a first data object key, a random value (128) and the user identifier being included in the calculation,
- means (114; 218) for calculating a second data object key from the first data object key using an asymmetrical cryptographic key generation method, the first and second data object keys forming the asymmetrical cryptographic key pair,
the data processing system also comprising means for carrying out the following method steps:
a) carrying out an admissibility check (220) on the first data object key using check conditions, the check conditions comprising the usability of the first data object key to generate the second data object key from the first data object key using an asymmetrical cryptographic key generation method,
b) calculating the second data object key from the first data object key if the check conditions have been satisfied,
c) recalculating a new first data object key with a new random value (128) and carrying out step a) again if one of the check conditions has not been satisfied.

## Revendications

1. Procédé destiné à générer sur la base d'un identifiant d'utilisateur une paire de clés cryptographique asymétrique, le procédé comprenant :
- la réception d'une identification unique d'utilisateur (124) et d'une identification d'utilisateur sélectionnable quelconque associée à l'identifiant d'utilisateur (124),
- le calcul d'une valeur de fonction g(identifiant d'utilisateur) par utilisation d'une fonction *g* de l'identifiant d'utilisateur, *g* étant de préférence une fonction unidirectionnelle,
- la génération d'une valeur aléatoire (128),
- le calcul d'une première clé d'objet de données par utilisation d'une fonction f d'une valeur aléatoire (128) et de la valeur de fonction *g*(identifiant d'utilisateur),
- le calcul d'une seconde clé d'objet de données à partir de la première clé d'objets de données, les première et seconde clés d'objets de données constituant une paire de clés asymétrique,
dans lequel le procédé comprend en outre :
a) l'exécution d'un test d'autorisation (220) de la première clé d'objet de données au moyen de conditions de test, les conditions de test comprenant l'aptitude à l'utilisation de la première clé d'objet de données pour générer la seconde clé d'objet de données à partir de la première clé d'objet de données au moyen d'un procédé de génération de clé cryptographique asymétrique,
b) lorsque les conditions de test sont satisfaites, le calcul de la seconde clé d'objet de données à partir de la première clé d'objet de données,
c) lorsque l'une des conditions de test n'est pas satisfaite, le calcul à nouveau d'une nouvelle première clé d'objet de données avec une nouvelle valeur aléatoire (128) et l'exécution à nouveau de l'étape a).

2. Procédé selon la revendication 1, dans lequel la paire de clés asymétrique est conçue pour un système cryptographique, par exemple pour un système cryptographique du type à courbes elliptiques, RSA, DLP ou autre.

3. Procédé d'utilisation d'une paire de clés cryptographique asymétrique ayant été générée conformément à un procédé selon la revendication 1 ou 2, dans lequel le procédé comprend une ou plusieurs des étapes suivantes :
- le cryptage d'un objet de données au moyen de la seconde clé d'objet de données de la paire de clés,
- le décryptage d'un objet de données au moyen de la première clé d'objet de données de la paire de clés,
- la génération d'une signature numérique d'un objet de données au moyen de la première clé d'objet de données de la paire de clés,
- la vérification d'une signature numérique d'un objet de données au moyen de la seconde clé d'objet de données de la paire de clés,
- l'exécution d'autres opérations cryptographiques au moyen des clés d'objets de données de la paire de clés.

4. Produit de programme informatique (114 ; 116 ; 218 ; 220 ; 222) comprenant des instructions exécutables par un processeur pour mettre en oeuvre des étapes de procédé destinées à générer une paire de clés asymétrique, le procédé comprenant les étapes suivantes :
- la réception d'un identifiant d'utilisateur sélectionnable quelconque ;
- le calcul d'une première clé d'objet de données, une valeur aléatoire (128) et l'identifiant d'utilisateur étant utilisés dans le calcul,
- le calcul d'une seconde clé d'objet de données à partir de la première clé d'objet de données au moyen d'un procédé de génération de clé cryptographique asymétrique, les première et seconde clés d'objets de données constituant la paire de clés cryptographique asymétrique,
le procédé comprenant en outre :
a) l'exécution d'un test d'autorisation (220) de la première clé d'objet de données au moyen de conditions de test, les conditions de test comprenant l'aptitude à l'utilisation de la première clé d'objet de données pour générer la seconde clé d'objet de données à partir de la première clé d`objet de données au moyen d'un procédé de génération de clé cryptographique asymétrique,
b) lorsque les conditions de test sont satisfaites, le calcul de la seconde clé d'objet de données à partir de la première clé d'objet de données,
c) lorsque l'une des conditions de test n'est pas satisfaite, le calcul à nouveau d'une nouvelle première clé d'objet de données avec une nouvelle valeur aléatoire (128) et l'exécution à nouveau de l'étape a).

5. Produit de programme informatique selon la revendication 4, dans lequel le calcul de la première clé d'objet de données s'effectue par utilisation d'une fonction g qui est appliquée à l'identifiant d'utilisateur, la fonction g étant de préférence une fonction unidirectionnelle, comme par exemple une fonction de hachage cryptographique.

6. Produit de programme informatique selon la revendication 4, dans lequel l'identifiant d'utilisateur est reçu sous la forme d'une valeur de fonction d'une fonction g qui a été appliquée à l'identifiant d'utilisateur, la fonction g étant de préférence une fonction unidirectionnelle, comme par exemple une fonction de hachage cryptographique.

7. Produit de programme informatique selon l'une quelconque des revendications 4 à 6, dans lequel la première clé d'objet de données est calculée par application d'une fonction f à la valeur aléatoire (128) et de g(identifiant d'utilisateur).

8. Produit de programme informatique selon la revendication 7, dans lequel la fonction f est une fonction unidirectionnelle, comme par exemple une fonction de hachage cryptographique.

9. Produit de programme informatique selon l'une quelconque des revendications 4 à 8, dans lequel le procédé de génération de clé cryptographique asymétrique est un procédé à courbes elliptiques, la seconde clé étant calculée par multiplication de la première clé par un point d'une courbe elliptique.

10. Produit de programme informatique selon la revendication 9, dans lequel la condition de test est la condition selon laquelle la première clé d'objet de données est supérieure à 1 et inférieure à l'ordre de la courbe elliptique.

11. Produit de programme informatique selon l'une quelconque des revendications 9 ou 10, dans lequel la condition de test est la condition selon laquelle la longueur binaire de la valeur aléatoire est supérieure ou égale à la longueur binaire de l' ordre de la courbe elliptique.

12. Produit de programme informatique selon l'une quelconque des revendications 9 à 11, dans lequel la condition de test est la condition selon laquelle à valeur aléatoire (128) est sélectionnée de manière à ce que la valeur de la première clé d'objet de données générée soit inférieure à l'ordre de la courbe elliptique.

13. Produit de programme informatique selon l`une quelconque des revendications 4 à 8, dans lequel le procédé de génération de clé cryptographique asymétrique est un procédé RSA, dans lequel la condition de test est la condition selon laquelle la fonction φ Eulérienne du module n utilisé pour le procédé de génération de clé RSA et la première clé sont premières entre elles.

14. Produit de programme informatique selon la revendication 13, dans lequel la condition de test est en outre la condition selon laquelle la première clé d'objet de données présente une valeur comprise entre 2 et la valeur de la fonction φ Eulérienne du module n utilisé pour le procédé de génération de clé RSA moins 2.

15. Produit de programme informatique selon l'une quelconque des revendications 4 à 14, dans lequel la valeur aléatoire (128) est extraite d'une banque de données (132), la valeur aléatoire (128) étant associée de manière unique à l'identification d'utilisateur (124).

16. Produit de programme informatique selon l'une quelconque des revendications 4 ou 15, dans lequel la valeur aléatoire (128) est stockée de manière cryptée dans la banque de données.

17. Produit de programme informatique selon l'une quelconque des revendications 4 à 16, dans lequel le produit de programme informatique est réalisé sous la forme d'une mini-application (112) ou d'un module d'extension de navigateur, ou est une application autonome qui s'exécute sur un calculateur d'une autorité de confiance ou une application embarquée qui s'exécute dans un module matériel sécurisé.

18. Système de traitement de données (100 ; 208) destiné à générer une paire de clés cryptographique asymétrique, dans lequel le système de traitement de données comprend :
- des moyens (102) destinés à recevoir un identifiant d'utilisateur sélectionnable quelconque,
- des moyens (114 ; 218 ; 116 ; 220 ; 222) destinés à calculer une première clé d'objet de données, une valeur aléatoire (128) et l'identifiant d'utilisateur étant utilisés dans le calcul,
- des moyens (114 ; 218) destinés à calculer une seconde clé d'objet de données à partir de la première clé d'objet de données au moyen d'un procédé de génération de clé cryptographique asymétrique, les première et seconde clés d'objets de données constituant la paire de clés cryptographique asymétrique,
le système de traitement de données comprenant en outre des moyens destinés à mettre en oeuvre les étapes de procédé suivantes :
a) l'exécution d'un test d'autorisation (220) de la première clé d'objet de données au moyen de conditions de test, les conditions de test comprenant l'aptitude à l'utilisation de la première clé d'objet de données pour générer la seconde clé d'objet de données à partir de la première clé d'objet de données au moyen d'un procédé de génération de clé cryptographique asymétrique,
b) lorsque les conditions de test sont satisfaites, le calcul de la seconde clé d'objet de données à partir de la première clé d'objet de données,
c) lorsque l'une des conditions de test n'est pas satisfaite, le calcul à nouveau d'une nouvelle première clé d'objet de données avec une nouvelle valeur aléatoire (128) et l'exécution à nouveau de l'étape a).
